# EUROPÄISCHE PATENTSCHRIFT

(11) **EP 4 309 986 B1**
(45) Veröffentlichungstag und Bekanntmachung des Hinweises auf die Patenterteilung: **12.11.2025**
(21) Anmeldenummer: 23186483.6
(22) Anmeldetag: 19.07.2023
(51) Int. Cl.: B62L 3/02

(54) **GEBERVORRICHTUNG FÜR EINE HYDRAULISCHE BREMSE LENKERGEFÜHRTER FAHRZEUGE UND HYDRAULISCHE BREMSE FÜR EIN LENKERGEFÜHRTES FAHRZEUG**
ACTUATING DEVICE FOR A HYDRAULIC BRAKE OF STEERING-GUIDED VEHICLES AND HYDRAULIC BRAKE FOR A STEERING-GUIDED VEHICLE
DISPOSITIF DE COMMANDE DE FREIN HYDRAULIQUE POUR UN VÉHICULE GUIDÉ PAR UN GUIDON, ET FREIN HYDRAULIQUE POUR UN VÉHICULE À GUIDON

(30) Priorität: 19.07.2022 DE 102022207379
(43) Veröffentlichungstag der Anmeldung: 24.01.2024
(73) Patentinhaber: Gustav Magenwirth GmbH & Co. KG, 72574 Bad Urach (DE)
(72) Erfinder: RUOPP, Michael, 89180 Berghülen (DE); WECHSLER, Axel, 71067 Sindelfingen (DE); WILDBRETT, Vincent, 88630 Pfullendorf (DE); FRITSCHLE, Stefan, 72574 Bad Urach - Wittlingen (DE); HUJER, Joachim, 72582 Grabenstetten (DE); KÄSTLE, Bernd, 72574 Bad Urach - Sirchingen (DE)
(74) Vertreter: Friese Goeden Patentanwälte PartGmbB

(56) Entgegenhaltungen:
- EP-A2- 2 147 853
- WO-A1-2020/244698
- DE-A1- 102020 118 362

## Beschreibung

Die Erfindung betrifft eine Gebervorrichtung für eine hydraulische Bremse lenkergeführter Fahrzeuge, insbesondere für eine hydraulische Fahrradbremse, weiter insbesondere für eine hydraulische Scheibenbremse und/oder hydraulische Felgenbremse, und eine hydraulische Bremse für ein lenkergeführtes Fahrzeug, insbesondere für ein Fahrrad, gemäß den Oberbegriffen der unabhängigen Ansprüche.

Hydraulische Bremsen lenkergeführter Fahrzeuge weisen üblicherweise eine an einem Lenker montierte Geberarmatur auf, an der eine Hydraulikleitung angeschlossen ist, die zu einer Nehmerarmatur führt, die beispielsweise ein Bremszylinder(paar) einer hydraulischen (Fahrrad-) Felgenbremse bzw. einen Bremssattel einer hydraulischen (Fahrrad- oder Motorrad-)Scheibenbremse angeschlossen ist.

Es ist üblich, derartige hydraulische Bremsen vorbefüllt an den Erstausrüster bzw. Endkunden auszuliefern, damit der Hersteller das aufwendige Befüllen und Entlüften der hydraulischen Bremse mit seiner Erfahrung sicher und zuverlässig ausführen kann. Zur Montage an dem lenkergeführten Fahrzeug wird die Hydraulikleitung außen oder innen verlegt.

Wenn die Hydraulikleitung nicht außen am Fahrzeug, sondern innen, d.h. zumindest teilweise in dem Rahmen und/oder Lenker, verlegt werden soll, ist es erforderlich, die Gebervorrichtung und /oder die Nehmervorrichtung der hydraulischen Bremse von der Hydraulikleitung zu trennen und/oder die Hydraulikleitung zu trennen. Somit kann die Hydraulikleitung an den gewünschten Stellen innen verlegt werden.

Damit die hydraulische Bremse trotzdem vorbefüllt an den Kunden (z.B. Erstausrüster bzw. Werkstatt oder Endkunde) ausgeliefert werden kann, ist es aus der DE 10 2011 085 000 A1 bekannt, die hydraulische Bremse in zwei Teilen auszuliefern und die Trennstellen abzudichten, d.h. den Hydraulikanschluss der Gebervorrichtung, von der die Hydraulikleitung nach dem Befüllen der hydraulischen Bremse entfernt wurde, und die offene Seite der Hydraulikleitung abzudichten. Um die Dichtung zu entfernen, muss die montierte und wieder verbundene Bremse betätigt werden, so dass das Dichtungselement reißt und in der Leitung verbleibt.

Die bekannten Hydraulikanschlussvorrichtungen stellen eine Möglichkeit bereit, vorbefüllte Gebervorrichtungen getrennt von der Hydraulikleitung auszuliefern, so dass die Leitung innen verlegt und das System wieder zusammengesetzt werden kann. Es besteht aber der Nachteil, dass die Dichtung eventuell nicht vollständig entfernt wird und es daher zu Fehlern im Betrieb kommen kann, beispielsweise wenn Reste der gelösten Dichtungseinrichtung abreißen und die Betätigung stören.

In der EP 3 434 543 B1 wird vorgeschlagen, als Dichtungseinrichtung ein Rückschlagventil vorzusehen, um diese Probleme zu vermeiden.

Um Probleme beim Transport mit der Verschmutzung des Hydraulikanschlusses der Gebervorrichtung zu vermeiden, wird dabei in der EP 3 434 543 B1 vorgeschlagen, einen separaten Stopfen vorzusehen, der in das Gewinde des Hydraulikanschlusses der Gebervorrichtung eingedreht werden kann, um eine sichere Abdichtung des Hydraulikanschlusses zu gewährleisten. Diese bekannte Ausführung hat den Nachteil, dass zur Montage der Hydraulikleitung an der Gebervorrichtung der Stopfen erst aufwendig entfernt werden muss. In einem weiteren Schritt muss dann eine Abdeckeinrichtung auf der Hydraulikleitung angeordnet und diese an dem Hydraulikanschluss befestigt werden. Es besteht daher ein Bedarf an einer Gebervorrichtung für eine hydraulische Bremse, die vorbefüllt ist und gleichzeitig ohne Gefahr einer Verschmutzung des Hydraulikanschlusses transportiert, ausgeliefert und anschließend einfach und sicher montiert werden kann.

Aus der DE 10 2019 217 231 A1 sind Gebervorrichtungen für eine hydraulische Bremse bekannt, bei denen ein Hydraulikfluid-Bypassweg zum Umleiten des Hydraulikfluids aus einem Raum zwischen der Hydraulikschlauch-Befestigungsgruppe und dem Gehäuse der Hydraulikkomponente während der Montage der Hydraulikschlauch-Befestigungsgruppe an die Hydraulikkomponente vorgesehen ist. Optional ist ein Brechelement vorgesehen, mit dem bei der Montage ein Dichtelement aufgebrochen werden kann, das an einem Einsatz angeklebt ist, der in einem Endabschnitt des Hydraulikschlauchs eingesetzt ist. Diese bekannten Gebervorrichtungen können nicht befüllt ausgeliefert werden, wenn der Hydraulikschlauch nicht an der Gebervorrichtung montiert ist.

Aus der DE 10 2019 208 066 A1 sind Gebervorrichtungen für eine hydraulische Bremse bekannt, die getrennt ausgeliefert werden können und Rückschlagventile aufweisen, mit denen die vorbefüllten Gebervorrichtungen sicher für den Transport verschlossen werden können. Da die Erstausrüster den Wunsch nach einer hohen Sicherheit bei der Montage und nach eines hohen Automatisierungsgrads für die Montage haben, besteht trotzdem der Bedarf, die bekannten Gebervorrichtungen hinsichtlich Sicherheit bei einer einfacheren Montage und/oder einem höheren Automatisierungsgrad weiter zu verbessern.

Die EP 2 147 853 A2 offenbart eine Gebervorrichtung gemäß dem Oberbegriff von Anspruch 1. Die bekannte Gebervorrichtung hat den Nachteil, dass sie für eine getrennte Auslieferung vorbefüllter hydraulischer Systeme für lenkergeführte Fahrzeuge ungeeignet ist.

Der Erfindung liegt daher die Aufgabe zugrunde, eine Gebervorrichtung für eine hydraulische Bremse anzugeben, die eine getrennte Auslieferung vorbefüllter hydraulischer Systeme für lenkergeführte Fahrzeuge ermöglichen, und gleichzeitig einen sicheren Transport, einen sicheren Betrieb und einen hohen Grad an Automatisierung bei der Montage gewährleisten.

Die Aufgabe wird erfindungsgemäß durch eine Gebervorrichtung für eine hydraulische Bremse gemäß Anspruch 1 gelöst. Vorteilhafte Weiterbildungen der Erfindung finden sich in den Unteransprüchen.

Gemäß der Erfindung wird eine Gebervorrichtung, insbesondere für eine hydraulische Bremse oder Kupplung lenkergeführter Fahrzeuge, angegeben, die ein Gehäuse mit einer Kupplungsöffnung, in die ein Leitungsstutzen zum Kuppeln einer Hydraulikleitung an das Gehäuse anordbar ist, und eine Verriegelungseinrichtung aufweist, die derart ausgebildet und angeordnet ist, dass der Leitungsstutzen in der Kupplungsöffnung mit der Verriegelungseinrichtung verriegelbar ist, sobald der Leitungsstutzen in einer Betriebsposition in der Kupplungsöffnung angeordnet ist, in der die Gebervorrichtung betätigbar ist, um hydraulischen Druck aufzubauen, wobei in dem Gehäuse eine Ventileinrichtung mit einem Ventilschließglied angeordnet ist, das derart ausgebildet und angeordnet ist, dass das Ventilschließglied in einer geschlossen Stellung die Kupplungsöffnung verschließt, wenn der Leitungsstutzen nicht in der Betriebsposition in der Kupplungsöffnung angeordnet ist, und das Ventilschließglied in einer offenen Stellung die Kupplungsöffnung öffnet, wenn der Leitungsstutzen in der Betriebsposition in der Kupplungsöffnung angeordnet ist, wobei das Ventilschließglied derart angeordnet und ausgebildet ist, dass das Ventilschließglied den Leitungstutzen umschließt, wenn der Leitungsstutzen in der Betriebsposition in der Kupplungsöffnung angeordnet ist, wobei das Ventilschließglied eine Membran aufweist, die derart ausgebildet und angeordnet ist, dass die Membran die Kupplungsöffnung verschließt, wenn der Leitungsstutzen noch nicht in der Betriebsposition in der Kupplungsöffnung angeordnet wurde, und der Leitungsstutzen die Membran durchstößt, wenn der Leitungsstutzen in der Betriebsposition in der Kupplungsöffnung angeordnet wird.

Erfindungsgemäß kann das Ventilschließglied derart angeordnet und ausgebildet sein, dass das Ventilschließglied Durchgänge aufweist, die mit einem Durchgang im dem Leitungstutzen fluidverbunden sind, wenn der Leitungsstutzen in der Betriebsposition in der Kupplungsöffnung angeordnet ist.

Erfindungsgemäß kann die Gebervorrichtung einen Einsatz aufweisen, der derart angeordnet und ausgebildet ist, dass der Einsatz sich das Ventilschließglied in der Kupplungsöffnung in axialer Richtung gegen das Gehäuse einklemmt.

Erfindungsgemäß kann die Gebervorrichtung einen Einsatz aufweisen, der derart angeordnet und ausgebildet ist, dass der Einsatz das Ventilschließglied gegen eine Bewegung in axialer Richtung sichert.

Erfindungsgemäß kann der Einsatz einen Flansch aufweisen, an dem sich das Ventilschließglied in axialer Richtung abstützen kann.

Erfindungsgemäß kann der Einsatz derart angeordnet und ausgebildet sein, dass der Einsatz das Ventilschließglied in der geschlossenen Stellung der Ventileinrichtung sichert bzw. abstützt. Zusätzlich oder alternativ kann der Einsatz derart angeordnet und ausgebildet sein, dass der Einsatz das Ventilschließglied in der geöffneten Stellung der Ventileinrichtung sichert bzw. abstützt.

Erfindungsgemäß kann die Membran derart ausgebildet und angeordnet sein, dass die Membran die Kupplungsöffnung verschließt, wenn die Gebervorrichtung noch nicht betätigt wurde, und die Membran aufgebrochen wird, wenn die mit Hydraulikfluid gefüllte Gebervorrichtung das erste Mal betätigt wird und/oder der Leitungsstutzen in der Betriebsposition in der Kupplungsöffnung angeordnet ist.

Erfindungsgemäß kann die Membran eine oder mehrere Sollbruchstellen aufweisen, die vorzugsweise als eine oder mehrere Rillen ausgebildet sein können.

Erfindungsgemäß kann der Leitungsstutzen derart ausgebildet sein, dass die Membran an bestimmten Stellen aufgebrochen wird, wenn der Leitungsstutzen beim Bewegen in die Betriebsstellung und/oder bei der Betätigung der Gebervorrichtung mit der Membran in Eingriff kommt, vorzugsweise derart, dass der Leitungsstutzen die Membran durchstößt bzw. dass die Membran auf den Leitungsstutzen gedrückt wird.

Erfindungsgemäß kann das Ventilschließglied einen Ringabschnitt aufweisen, der den Leitungstutzen umschließt, wenn der Leitungsstutzen in der Betriebsposition in der Kupplungsöffnung angeordnet ist.

Erfindungsgemäß kann die Membran seitlich an dem Ringabschnitt angeordnet sein

Erfindungsgemäß kann die Membran mittig in dem Ringabschnitt angeordnet sein.

Erfindungsgemäß kann der Ringabschnitt des Ventilschließglieds derart angeordnet und ausgebildet sein, dass der Ringabschnitt eine radiale Dichtung zwischen der Kupplungsöffnung des Gehäuses und dem Leitungstutzen ausbildet, wenn der Leitungsstutzen in der Betriebsposition in der Kupplungsöffnung angeordnet ist.

Erfindungsgemäß kann in der Kupplungsöffnung ein Einsatz angeordnet sein, der derart ausgebildet und angeordnet ist, dass der Einsatz das Ventilschließglied in der Kupplungsöffnung sichert und der Leitungsstutzen in dem Einsatz zum Kuppeln der Hydraulikleitung an das Gehäuse anordbar ist.

Erfindungsgemäß kann der Ringabschnitt derart angeordnet und ausgebildet sein, dass der Ringabschnitt eine axiale Dichtung zwischen der Kupplungsöffnung des Gehäuses und dem Einsatz 130) ausbildet.

Erfindungsgemäß kann der Einsatz einen Vorsprung aufweisen, der derart angeordnet und ausgebildet ist, dass der Vorsprung in eine Ausnehmung in dem Gehäuse derart eingreift, dass der Vorsprung den Einsatz in der Kupplungsöffnung sichert.

Erfindungsgemäß kann der Leitungsstutzen einen Durchgang für Hydraulikfluid und das Ventilschließglied einen Durchgang aufweisen, der mit dem Durchgang in Verbindung steht, wenn der Leitungsstutzen in der Betriebsposition in der Kupplungsöffnung angeordnet ist.

Erfindungsgemäß kann die Gebervorrichtung einen Druckraum aufweisen, und das Ventilschließglied kann einen Dichtungsabschnitt aufweisen, der derart angeordnet und ausgebildet ist, dass der Druckraum mit dem Durchgang in Verbindung steht, wenn der Leitungsstutzen in der Betriebsposition in der Kupplungsöffnung angeordnet ist, und dass der Dichtungsabschnitt die Verbindung zwischen dem Durchgang und dem Druckraum unterbricht, wenn der Leitungsstutzen nicht in der Betriebsposition in der Kupplungsöffnung angeordnet ist.

Erfindungsgemäß kann die Kupplungsöffnung zumindest einen Überströmkanal oder mehrere Überströmkanäle aufweisen, und der Dichtungsabschnitt kann derart angeordnet und ausgebildet sein, dass der Dichtungsabschnitt den zumindest einen Überströmkanal oder die mehreren Überströmkanäle überfährt, wenn der Leitungsstutzen in der Betriebsposition in der Kupplungsöffnung angeordnet ist, und dass der Dichtungsabschnitt gegen die Kupplungsöffnung abdichtet, wenn der Leitungsstutzen nicht in der Betriebsposition in der Kupplungsöffnung angeordnet ist.

Erfindungsgemäß kann in der Kupplungsöffnung ein Einsatz zur Aufnahme des Leitungsstutzens vorgesehen sein.

Erfindungsgemäß kann das Ventilschließglied einen Durchgang und einen Dichtungsabschnitt aufweisen.

Erfindungsgemäß kann der Einsatz und das Ventilschließglied derart angeordnet und ausgebildet sein, dass der Druckraum mit dem Durchgang in Verbindung steht, wenn der Leitungsstutzen in der Betriebsposition in der Kupplungsöffnung angeordnet ist.

Erfindungsgemäß kann der Einsatz und das Ventilschließglied zusätzlich oder alternativ derart angeordnet und ausgebildet sein, dass der Dichtungsabschnitt gegen den Einsatz abdichtet, wenn der Leitungsstutzen nicht in der Betriebsposition in der Kupplungsöffnung angeordnet ist.

Erfindungsgemäß kann die Gebervorrichtung eine Federeinrichtung aufweisen, die derart angeordnet und ausgebildet ist, dass Federeinrichtung das Ventilschließglied in Richtung des Leitungsstutzens vorspannt.

Erfindungsgemäß kann die Gebervorrichtung einen Anschlag aufweisen, der derart angeordnet und ausgebildet ist, dass der Leitungsstutzen das Ventilschließglied gegen den Anschlag drückt, wenn der Leitungsstutzen in der Betriebsposition in der Kupplungsöffnung angeordnet ist.

Erfindungsgemäß kann der Leitungsstutzen und das Ventilschließglied derart angeordnet und ausgebildet sein, dass der Leitungsstutzen und das Ventilschließglied formschlüssig in Eingriff sind.

Die Ausführungen der Erfindung haben den Vorteil, dass eine leichte Montage mit einer hohen Betriebssicherheit gewährleistet ist, wobei gleichzeitig ein hoher Automatisierungsgrad erreicht ist.

Aus der DE 10 2021 122 717 A1 ist eine Gebervorrichtung bekannt, die eine Transportsicherung aufweist, die den Hebel in der unbetätigten Stellung sichert. Es besteht der Nachteil, dass die Transportsicherung für Gebervorrichtungen mit einem Ausgleichsbehälter ungünstig sind, weil bei montierter Transportsicherung eine Verbindung zwischen Ausgleichsbehälter und Druckraum besteht. Der Erfindung liegt daher auch die Aufgabe zugrunde, die erfindungsgemäße Gebervorrichtung mit einer Transportsicherung weiterzubilden, die bei Ausführungen mit einem Ausgleichsbehälter sowohl die Betätigung der Gebervorrichtung als auch einen Austausch von Hydraulikfluid zwischen dem Ausgleichshälter und dem Druckraum verhindern kann.

Diese Aufgabe der Erfindung wird mit einer Gebervorrichtung gemäß den Merkmalen von Anspruch 15 gelöst.

Erfindungsgemäß kann die Gebervorrichtung einen Hebel zur Betätigung der Gebervorrichtung und einen Ausgleichsbehälter für Hydraulikfluid aufweisen, wobei die Gebervorrichtung einen Kolben und eine Ausgleichsöffnung aufweist, die bei der Betätigung der Gebervorrichtung überfahren wird, um die Verbindung zwischen dem Ausgleichsbehälter und einem Druckraum zu unterbrechen, wobei die Gebervorrichtung eine erste Transportsicherung aufweist, die derart ausgebildet und angeordnet ist, dass der Hebel gegen eine Betätigung gesichert ist, wobei die Gebervorrichtung eine zweite Transportsicherung aufweist, die derart ausgebildet und angeordnet ist, dass der Hebel in einer teilbetätigten Stellung gehalten wird, in der der Kolben die Ausgleichsöffnung überfahren hat.

Diese Ausführung der Erfindung hat den Vorteil, dass zur Transportsicherung nicht nur der Hebel in einer festen Stellung gehalten wird, sondern auch die Verbindung zwischen dem Ausgleichsbehälter und dem System unterbrochen ist, so dass die Gefahr vermindert wird, dass sich bei dem Transport Schaum in dem System bildet.

Erfindungsgemäß können die oben genannten Ausführungen der Erfindung mit den zumindest zwei Transportsicherungen der zuletzt genannten Ausführung ausgebildet werden, bzw. kann die zuletzt genannte Ausführung mit den zumindest zwei Transportsicherungen mit einem oder mehreren Merkmalen der anderen Ausführungen der Erfindung weitergebildet werden.

Die Erfindung betrifft auch eine hydraulische Bremse bzw. hydraulische Scheibenbremse bzw. hydraulische Felgenbremse für lenkergeführte Fahrzeuge mit einer Gebervorrichtung gemäß einer der oben beschriebenen Ausführungen der Erfindung.

Die Erfindung wird im Folgenden anhand der in den Figuren gezeigten Ausführungsbeispiele beschrieben. Dabei werden folgende Bezugszeichen verwendet:
- 100: Gebervorrichtung
- 110: Gehäuse
- 111: Durchgang zum Druckraum
- 112: Abschnitt mit kleinerem Durchmesser
- 113: Aufnahme (für Ventilschließglied 120)
- 114: Abschnitt mit größerem Durchmesser (zur Aufnahme des Einsatzes 130)
- 115: Hydraulikanschluss
- 117: Aussparung
- 118: Aussparung
- 120: Ventilschließglied
- 121: Membran
- 122: Rille (bzw. Sollbruchstelle)
- 123: Rille (bzw. Sollbruchstelle)
- 124: Ringabschnitt
- 130: Einsatz (z.B. Hülse)
- 131: Vorsprung
- 140: Verriegelungseinrichtung (z.B. Clip)
- 150: Stopfen (bzw. Transportsicherung)
- 151: Einsteckabschnitt
- 152: Übergang
- 153: Mittelabschnitt
- 154: Mittelabschnitt
- 155: Griffabschnitt
- 156: Angriffabschnitt
- 157: Durchgang
- 158: Eingriffabschnitt(für Verriegelungseinrichtung 140)
- 159: Abflachung
- 160: Leitungsstutzen
- 161: Endabschnitt
- 162: Übergang
- 163: Eingriffabschnitt(für Verriegelungseinrichtung 140)
- 164: Mittelabschnitt
- 165: Durchgang
- 166: Flansch
- 167: Hinterschnitt (zum Zurückziehen des Ventilschließglieds 120)
- 169: Flansch
- 170: Hydraulikleitung
- 200: Gebervorrichtung
- 210: Gehäuse
- 211: Durchgang zum Druckraum
- 212: Abschnitt mit kleinerem Durchmesser
- 213: Aufnahme (für Ventilschließglied 220)
- 214: Abschnitt mit größerem Durchmesser (zur Aufnahme des Einsatzes 230)
- 215: Hydraulikanschluss
- 216: Überströmkanal
- 218: Aussparung220 Ventilschließglied
- 224: Ringabschnitt
- 225: Durchgang
- 226: Fortsatz
- 227: Dichtungsabschnitt
- 230: Einsatz (z.B. Hülse)
- 239: Flansch
- 270: Federeinrichtung
- 300: Gebervorrichtung
- 310: Gehäuse
- 311: Durchgang zum Druckraum
- 312: Abschnitt mit kleinerem Durchmesser
- 314: Abschnitt mit größerem Durchmesser (zur Aufnahme des Einsatzes 330)
- 315: Hydraulikanschluss
- 320: Ventilschließglied
- 324: Ringabschnitt
- 325: Durchgang
- 326: Fortsatz
- 327: Dichtungsabschnitt
- 330: Einsatz (z.B. Hülse)
- 332: Abschnitt mit geringerer lichter Weite
- 333: Übergangsabschnitt
- 334: Abschnitt mit größerer lichter Weite
- 335: Dichtungsglied
- 339: Flansch
- 370: Federeinrichtung
- 400: Gebervorrichtung410 Gehäuse
- 411: Durchgang zum Druckraum 412 Abschnitt mit kleinerem Durchmesser
- 414: Abschnitt mit größerem Durchmesser (zur Aufnahme des Einsatzes 430)
- 415: Hydraulikanschluss
- 417: Aussparung
- 418: Anschlag
- 420: Ventilschließglied
- 425: Durchgang
- 426: Fortsatz
- 427: Dichtungsabschnitt
- 428: Vorsprung (zum Eingriff in Hinterschnitt 167)
- 429: Sicherungsring
- 430: Einsatz (z.B. Hülse)
- 431: Vorsprung
- 435: Dichtungsglied
- 439: Flansch
- 500: Gebervorrichtung
- 510: Gehäuse
- 511: Durchgang zum Druckraum
- 512: Abschnitt mit kleinerem Durchmesser
- 514: Abschnitt mit größerem Durchmesser (zur Aufnahme des Einsatzes 530)
- 515: Hydraulikanschluss
- 516: Überströmkanal
- 517: Aussparung
- 518: Stufe
- 520: Ventilschließglied
- 524: Ringabschnitt
- 525: Durchgang
- 526: Fortsatz
- 527: Dichtungsabschnitt
- 530: Einsatz (z.B. Hülse)
- 531: Vorsprung
- 532: Abschnitt mit geringerer lichter Weite
- 534: Abschnitt mit größerer lichter Weite
- 536: Flansch
- 538: Anschlagsbereich (für Leitungsstutzen 160)
- 539: Flansch
- 600: Gebervorrichtung
- 610: Gehäuse
- 611: Durchgang zum Druckraum
- 615: Hydraulikanschluss
- 618: Anschlag
- 620: Ventilschließglied
- 625: Durchgang
- 626: Fortsatz
- 627: Dichtungsabschnitt
- 628: Vorsprung (zum Eingriff in Hinterschnitt 167)
- 630: Einsatz (z.B. Hülse)
- 635: Dichtungsglied
- 639: Flansch
- 700: Gebervorrichtung
- 710: Gehäuse
- 711: Durchgang zum Druckraum
- 712: Abschnitt mit kleinerem Durchmesser
- 713: Aufnahme (für Ventilschließglied 720)
- 714: Abschnitt mit größerem Durchmesser (zur Aufnahme des Einsatzes 430)
- 715: Hydraulikanschluss
- 720: Ventilschließglied
- 724: Ringabschnitt
- 725: Durchgang
- 726: Mittelabschnitt
- 730: Einsatz (z.B. Hülse)
- 735: Dichtungsglied
- 737: Ventilsitz
- 800: Gebervorrichtung
- 810: Transportsicherung, um den Hebel 860 in eine teilbetätigte Stellung zu halten
- 820: Transportsicherung, um den Hebel 860 gegen eine Betätigung zu sichern
- 830: Rückstellfeder
- 840: Kolben
- 841: Dichtung
- 850: Ausgleichsbehälter
- 851: Ausgleichsöffnung
- 860: Hebel

Kurzbeschreibung der Figuren:
- Fig. 1: zeigt eine Schnittansicht durch die Gebervorrichtung gemäß einer Ausführung der Erfindung
- Fig. 2: zeigt eine Schnittansicht einer Gebervorrichtung gemäß einer Ausführung der Erfindung, die der Ausführung der Figuren 1 und 3 bis 9 im Wesentlichen entspricht und eine alternative Ausführung des Einsatzes aufweist.
- Fig. 3: zeigt eine Schnittansicht durch die Gebervorrichtung von Fig. 1, wobei anstelle des Leitungsstutzens ein Stopfen als Transportsicherung in dem Hydraulikanschluss angeordnet ist.
- Fig. 4: zeigt eine Seitenansicht des Ventilschließglieds der Gebervorrichtung von Fig. 1 bzw. Fig. 3.
- Fig. 5: zeigt eine Ansicht des Ventilschließglieds von Fig. 4, gesehen von der bezogen auf Fig. 4 rechten Seite, d.h. aus Sicht des in Fig. 1 gezeigten Leitungsstutzens bzw. aus Sicht des in Fig. 3 gezeigten Stopfens.
- Fig. 6: zeigt eine Ansicht des Ventilschließglieds von Fig. 4, gesehen von der bezogen auf Fig. 4 linken Seite, d.h. in Richtung des in Fig. 1 gezeigten Leitungsstutzens bzw. in Richtung des in Fig. 3 gezeigten Stopfens.
- Fig. 7: zeigt eine Seitenansicht des Stopfens der Gebervorrichtung von Fig. 3.
- Fig. 8: zeigt Ansicht des Stopfens von Fig. 7, gesehen von der bezogen auf Fig. 7 rechten Seite, d.h. in Richtung der Gebervorrichtung von Fig. 1.
- Fig. 9: zeigt Ansicht des Stopfens von Fig. 7, gesehen von bezogen auf Fig. 7 von oben.
- Fig. 10: zeigt eine Detailansicht einer Gebervorrichtung gemäß einer Ausführung der Erfindung, die der Ausführung der Figuren 1 und 3 bis 9 im Wesentlichen entspricht und eine alternative Ausführung des Ventilschließglieds aufweist.
- Fig. 11: zeigt eine Schnittansicht des Ventilschließglieds der Ausführung von Fig. 10 entlang der Linien XI-XI von Fig. 12.
- Fig. 12: zeigt eine Ansicht des Ventilschließglieds von Fig. 10, gesehen von der bezogen auf Fig. 10 rechten Seite, d.h. aus Sicht des in Fig. 10 gezeigten Einsatzes, in einem Zustand, bevor der Leitungsstutzen in dem Einsatz angeordnet wurde, d.h. in einem Zustand, in dem die Membran des Ventilschließglieds noch unversehrt ist.
- Fig. 13: zeigt eine Schnittansicht einer Gebervorrichtung gemäß einer Ausführung der Erfindung, die der Ausführung der Figuren 10 bis 12 im Wesentlichen entspricht und eine alternative Ausführung des Einsatzes aufweist, wobei die Gebervorrichtung in einem Zustand gezeigt ist, bevor der Leitungsstutzen vollständig in dem Einsatz angeordnet wurde, d.h. in einem Zustand, in dem die Membran des Ventilschließglieds noch unversehrt ist.
- Fig. 14: zeigt eine Schnittansicht der Gebervorrichtung von Fig. 13 in einem Zustand, bei dem Leitungsstutzen vollständig in dem Einsatz angeordnet wurde, d.h. in der Betriebsposition des Leitungsstutzens und in einem Zustand, in dem die Membran des Ventilschließglieds durch das Einsetzens des Leitungsstutzens an ihren Sollbruchstellen aufgetrennt worden ist.
- Fig. 15: zeigt Detailansicht von Fig. 13 des Kreises XV von Fig. 13.
- Fig. 16: zeigt Detailansicht von Fig. 14 des Kreises XVI von Fig. 14.
- Fig. 17: zeigt eine Schnittansicht einer Gebervorrichtung gemäß einer Ausführung der Erfindung, die der Ausführung der Figuren 13 bis 16 im Wesentlichen entspricht und eine alternative Ausführung des Ventilschließglieds aufweist, wobei die Gebervorrichtung in einem Zustand gezeigt ist, bevor der Leitungsstutzen vollständig in dem Einsatz angeordnet wurde, d.h. in einem Zustand, in dem das Ventilschließglied die Verbindung zwischen dem Druckraum der Gebervorrichtung und der Hydraulikleitung verschließt.
- Fig. 18: zeigt eine Schnittansicht der Gebervorrichtung von Fig. 17 in einem Zustand, bei dem Leitungsstutzen vollständig in dem Einsatz angeordnet wurde, d.h. in der Betriebsposition des Leitungsstutzens und in einem Zustand, in dem eine Verbindung zwischen dem Druckraum der Gebervorrichtung und der Hydraulikleitung besteht.
- Fig. 19: zeigt eine Schnittansicht der Gebervorrichtung von Fig. 17 entlang der Linien XIX-XIX von Fig. 18.

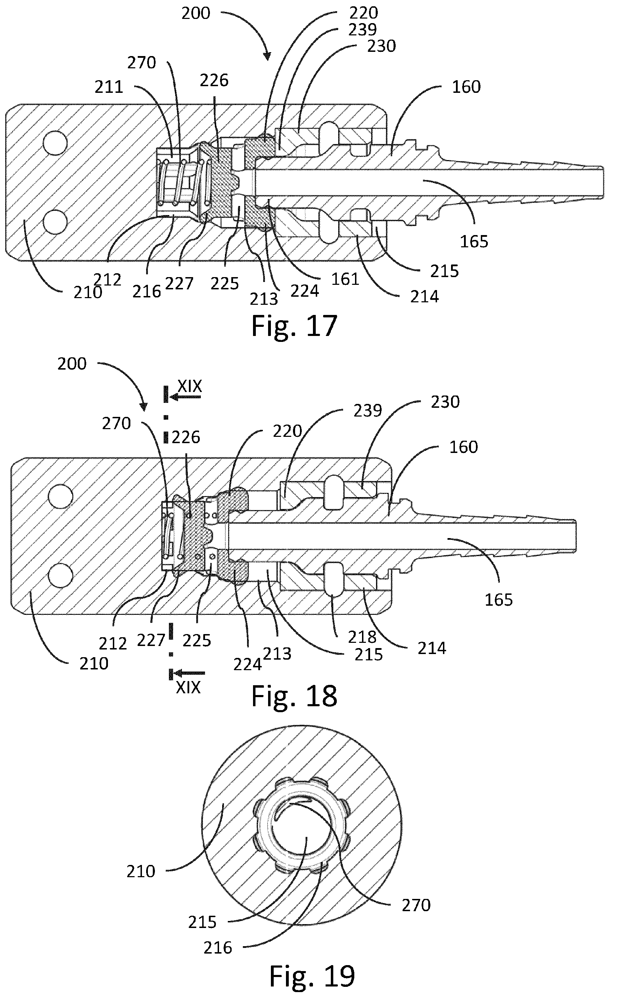

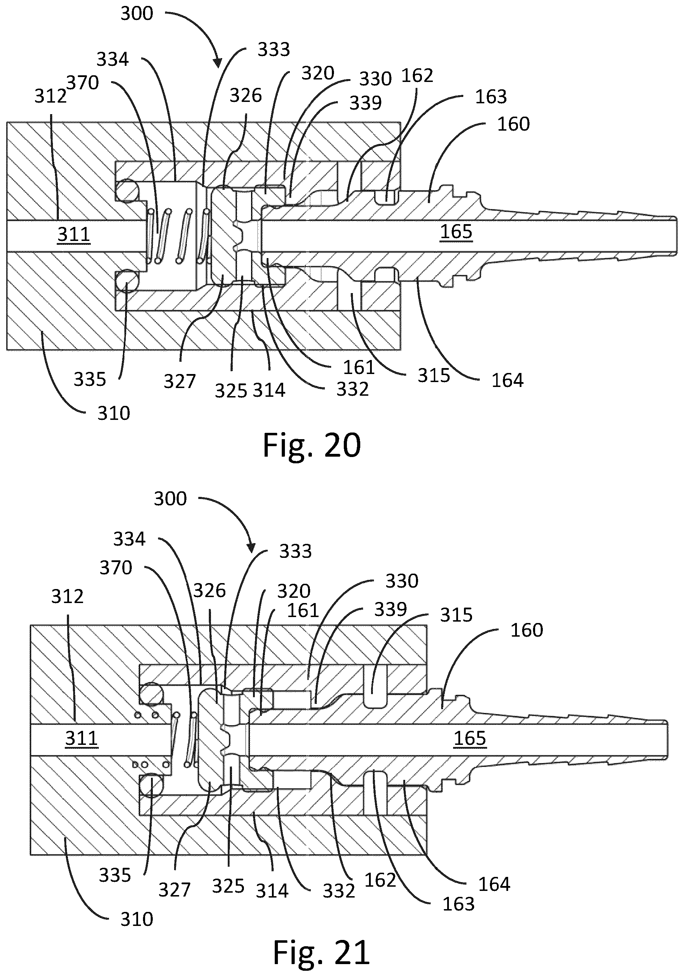

- Fig. 20: zeigt eine Schnittansicht einer Gebervorrichtung gemäß einer Ausführung der Erfindung, die der Ausführung der Figuren 17 bis 19 im Wesentlichen entspricht und eine alternative Ausführung des Einsatzes, eine alternative Ausführung des Ventilschließglieds und eine Federeinrichtung für das Ventilschließglied aufweist, wobei die Gebervorrichtung in einem Zustand gezeigt ist, bevor der Leitungsstutzen vollständig in dem Einsatz angeordnet wurde, d.h. in einem Zustand, in dem das Ventilschließglied die Verbindung zwischen dem Druckraum der Gebervorrichtung und der Hydraulikleitung verschließt.
- Fig. 21: zeigt eine Schnittansicht der Gebervorrichtung von Fig. 20 in einem Zustand, bei dem Leitungsstutzen vollständig in dem Einsatz angeordnet wurde, d.h. in der Betriebsposition des Leitungsstutzens und in einem Zustand, in dem eine Verbindung zwischen dem Druckraum der Gebervorrichtung und der Hydraulikleitung besteht.

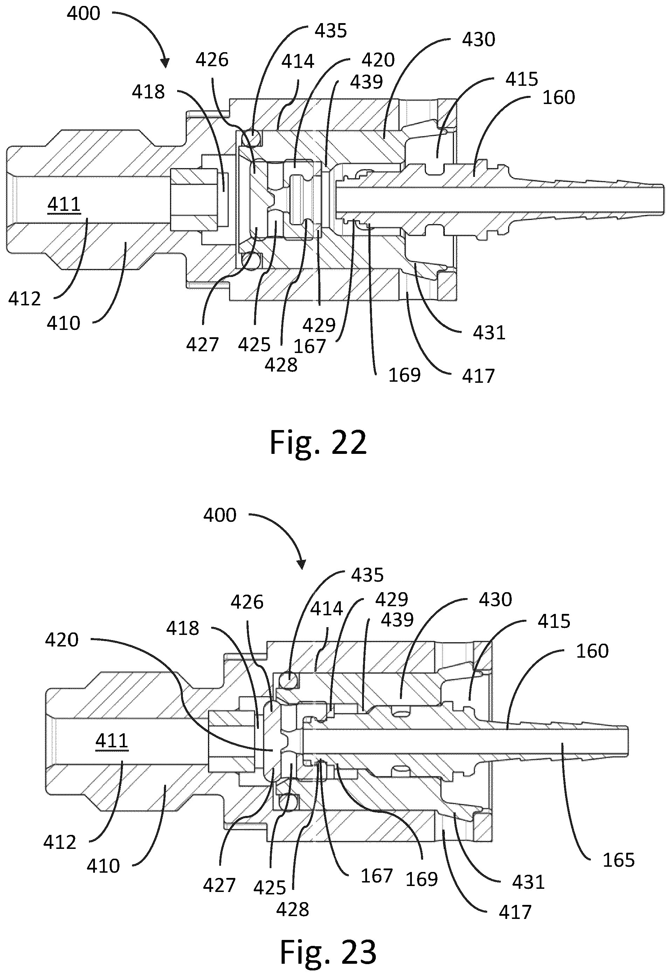

- Fig. 22: zeigt eine Schnittansicht einer Gebervorrichtung gemäß einer Ausführung der Erfindung, die der Ausführung der Figuren 20 bis 21 im Wesentlichen entspricht und eine alternative Ausführung des Einsatzes, eine alternative Ausführung des Ventilschließglieds, eine alternative Ausführung des Leitungsstutzens und einen Anschlag für das Ventilschließglied aufweist, wobei die Gebervorrichtung in einem Zustand gezeigt ist, bevor der Leitungsstutzen vollständig in dem Einsatz angeordnet wurde, d.h. in einem Zustand, in dem das Ventilschließglied die Verbindung zwischen dem Druckraum der Gebervorrichtung und der Hydraulikleitung verschließt.
- Fig. 23: zeigt eine Schnittansicht der Gebervorrichtung von Fig. 22 in einem Zustand, bei dem Leitungsstutzen vollständig in dem Einsatz angeordnet wurde, d.h. in der Betriebsposition des Leitungsstutzens und in einem Zustand, in dem eine Verbindung zwischen dem Druckraum der Gebervorrichtung und der Hydraulikleitung besteht.
- Fig. 24: zeigt eine Schnittansicht einer Gebervorrichtung gemäß einer Ausführung der Erfindung, die der Ausführung der Figuren 17 bis 19 im Wesentlichen entspricht und eine alternative Ausführung des Einsatze und eine alternative Ausführung des Gehäuses aufweist, wobei die Gebervorrichtung in einem Zustand gezeigt ist, bevor der Leitungsstutzen in dem Einsatz angeordnet wurde, d.h in einem Zustand, in dem das Ventilschließglied die Verbindung zwischen dem Durchgang zum Druckraum der Gebervorrichtung und dem Hydraulikleitungsanschluss der Gebervorrichtung verschließt.
- Fig. 25: zeigt eine Schnittansicht der Gebervorrichtung von Fig. 24 in einem Zustand, bei dem Leitungsstutzen vollständig in dem Einsatz angeordnet wurde, d.h. in der Betriebsposition des Leitungsstutzens und in einem Zustand, in dem eine Verbindung zwischen dem Druckraum der Gebervorrichtung und dem Leitungsstutzen und einer daran anzuordnenden Hydraulikleitung besteht.
- Fig. 26: zeigt eine Ansicht des Einsatzes der Gebervorrichtung von Fig. 24 aus Richtung der Hydraulikleitung, d.h. aus einer Richtung, die der rechten Seite von Fig. 27 entspricht.
- Fig. 27: zeigt eine Seitenansicht des Einsatzes der Gebervorrichtung von Fig. 24.
- Fig. 28: zeigt eine Schnittansicht einer Gebervorrichtung gemäß einer Ausführung der Erfindung, die der Ausführung der Figuren 22 bis 23 im Wesentlichen entspricht und eine alternative Ausführung des Gehäuses, eine alternative Ausführung des Einsatzes und eine alternative Ausführung des Ventilschließglieds aufweist, wobei die Gebervorrichtung in einem Zustand gezeigt ist, bevor der Leitungsstutzen vollständig in dem Einsatz angeordnet wurde, d.h. in einem Zustand, in dem das Ventilschließglied die Verbindung zwischen dem Druckraum der Gebervorrichtung und der Hydraulikleitung verschließt.
- Fig. 29: zeigt eine Schnittansicht der Gebervorrichtung von Fig. 28 in einem Zustand, bei dem Leitungsstutzen vollständig in dem Einsatz angeordnet wurde, d.h. in der Betriebsposition des Leitungsstutzens und in einem Zustand, in dem eine Verbindung zwischen dem Druckraum der Gebervorrichtung und der Hydraulikleitung besteht.
- Fig. 30: zeigt Detailansicht von Fig. 28 des Kreises XXX von Fig. 28.
- Fig. 31: zeigt Detailansicht von Fig. 29 des Kreises XXXI von Fig. 29.
- Fig. 32: zeigt eine Seitenansicht der Gebervorrichtung von Fig. 28.
- Fig. 33: zeigt eine Schnittansicht einer Gebervorrichtung gemäß einer Ausführung der Erfindung.
- Fig. 34: zeigt eine Schnittansicht einer Gebervorrichtung gemäß einer Ausführung der Erfindung mit Transportsicherungen entlang der Linien XXXIV-XXXIV von Fig. 35.
- Fig. 35: zeigt eine Schnittansicht der Gebervorrichtung von Fig. 34 mit Transportsicherungen entlang der Linien XXXV-XXXV von Fig. 34.
- Fig. 36: zeigt eine Schnittansicht der Gebervorrichtung von Fig. 34 entlang der Linien XXXVI-XXXVI von Fig. 37, wobei die Transportsicherungen entfernt worden sind.
- Fig. 37: zeigt eine Schnittansicht der Gebervorrichtung von Fig. entlang der Linien XXXVII-XXXVII von Fig. 36, wobei die Transportsicherungen entfernt worden sind.
- Fig. 38: zeigt eine perspektivische Ansicht der Gebervorrichtung von Fig. 34 mit Transportsicherungen von der Seite und schräg oben hinten.
- Fig. 39: zeigt eine Seitenansicht der Gebervorrichtung von Fig. 34, wobei die Transportsicherungen in Explosionsansicht dargestellt sind.
- Fig. 40: zeigt eine perspektivische Ansicht der Gebervorrichtung von Fig. 34 mit Transportsicherungen von schräg oben hinten.
- Fig. 41: zeigt eine perspektivische Ansicht der Gebervorrichtung von Fig. 34 mit Transportsicherungen von schräg oben hinten, wobei der Hebel nicht dargestellt ist, um die Einzelheiten der Aufnahme der Transportsicherungen besser zeigen zu können.

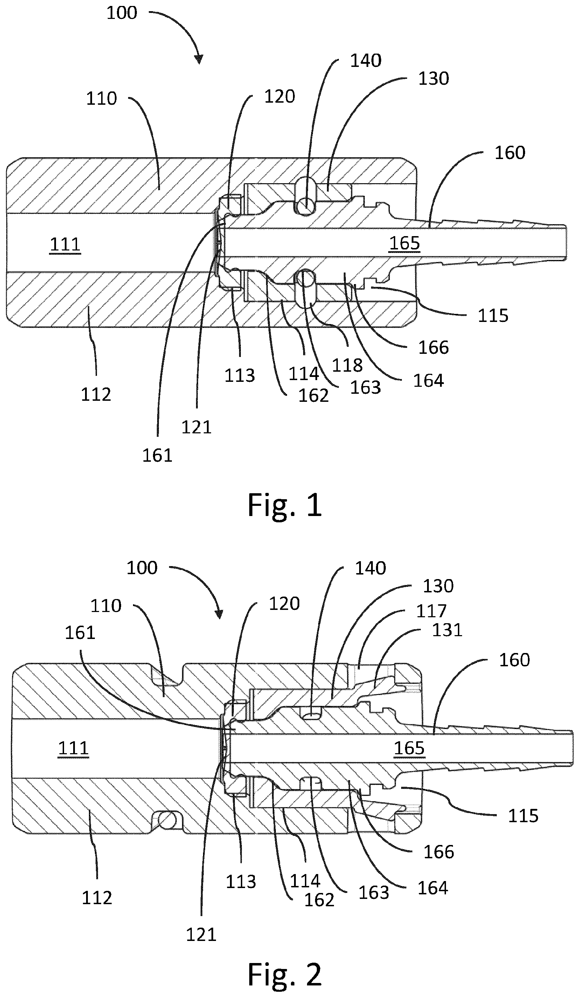

Fig. 1 zeigt die Gebervorrichtung 100 für eine hydraulische Bremse. Dargestellt ist der Abschnitt des Gehäuses 110 mit dem Hydraulikanschluss 115, der mit dem Durchgang 111 zu dem nicht dargestellten Druckraum der Gebervorrichtung 100 verbunden ist.

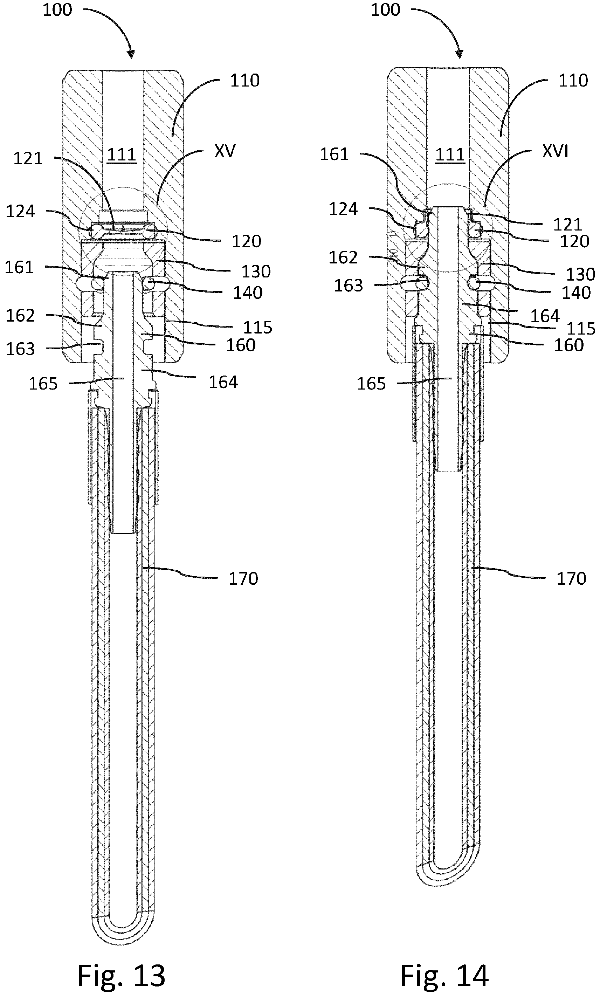

Die Gebervorrichtung 100 umfasst ein Gehäuse 110, in dem ein Kolben in Richtung eines Druckraums durch Betätigung eines Bremshebels verschiebbar angeordnet ist, um zur Betätigung der hydraulischen Bremse Druck aufzubauen. Erfindungsgemäß kann bei einem offenen System ein Ausgleichsbehälter vorgesehen sein, wie es üblicherweise bei hydraulischen Scheibenbremssystemen der Fall ist. Es ist aber erfindungsgemäß auch möglich, ein geschlossenes System vorzusehen, wie es üblicherweise bei hydraulischen Felgenbremsen der Fall ist. An der Gebervorrichtung 100 ist ein Hydraulikanschluss 115 zum Anschluss einer Hydraulikleitung 170, wie in Fig. 14 gezeigt, vorgesehen. Das Gehäuse 110 weist einen Abschnitt 112 mit kleinerem Durchmesser auf, in dem der Durchgang 111 zu dem nicht dargestelltem Druckraum der Gebervorrichtung 100 angeordnet ist. Das Gehäuse 110 weist ferner einen Abschnitt 114 mit größerem Durchmesser zur Aufnahme eines Einsatzes 130 auf, in den ein Leitungsstutzen 160 zum Anschluss einer Hydraulikleitung 170 angeordnet werden kann, wie in Fig. 1 darrgestellt. In axialer Richtung zwischen den Abschnitt 112 und dem Abschnitt 114 ist eine Aufnahme 113 für ein Ventilschließglied 120 vorgesehen. Die Aufnahme ist als Stufe ausgebildet, so dass sich das Ventilschließglied 120 in Fig. 1 nach links gegen die Wandung zum Abschnitt 112 abstützen kann. Beim Einsetzen des Leitungsstutzens 160 wird das Ventilschließglied 120 gegen diese Wandung gedrückt.

In Fig. 1 ist die Gebervorrichtung 100 für die Montage an einem Lenker eines lenkergeführten Fahrzeugs in einem vorbefüllten Zustand dargestellt, wobei ein Leitungsstutzen 160 in dem Hydraulikanschluss 115 angeordnet ist.

Als Transportsicherung ist die Verbindung zwischen dem Hydraulikanschluss 115 und dem Druckraum ist durch eine Ventileinrichtung verschlossen, die ein Ventilschließglied 120 aufweist, das in einer Stufe des Hydraulikanschlusses 115 angeordnet und dort mit einem Einsatz 130 gesichert ist, der als eine Hülse ausgebildet ist und dessen Innenkontur derart ausgebildet ist, dass sie zur Aufnahme des Leitungsstutzens 160 geeignet ist, an dem eine Hydraulikleitung 170 angeschlossen werden kann, wie in den Figuren 13 und 14 gezeigt. Bei dieser Ausführung ist der Leitungsstutzen 160 so kurz ausgebildet, dass er das Ventilschließglied 120 nicht zerstört, wenn der Leitungsstutzen 160 in den Hydraulikanschluss 115 eingesetzt wird. Um die Ventileinrichtung zu öffnen, kann die Gebervorrichtung 100 nach der Montage betätigt werden, so dass das Ventilschließglied 120 durch den bei der Betätigung entstehenden hydraulischen Druck an Sollbruchstellen aufbrechen, wie unten noch detailliert erläutert wird.

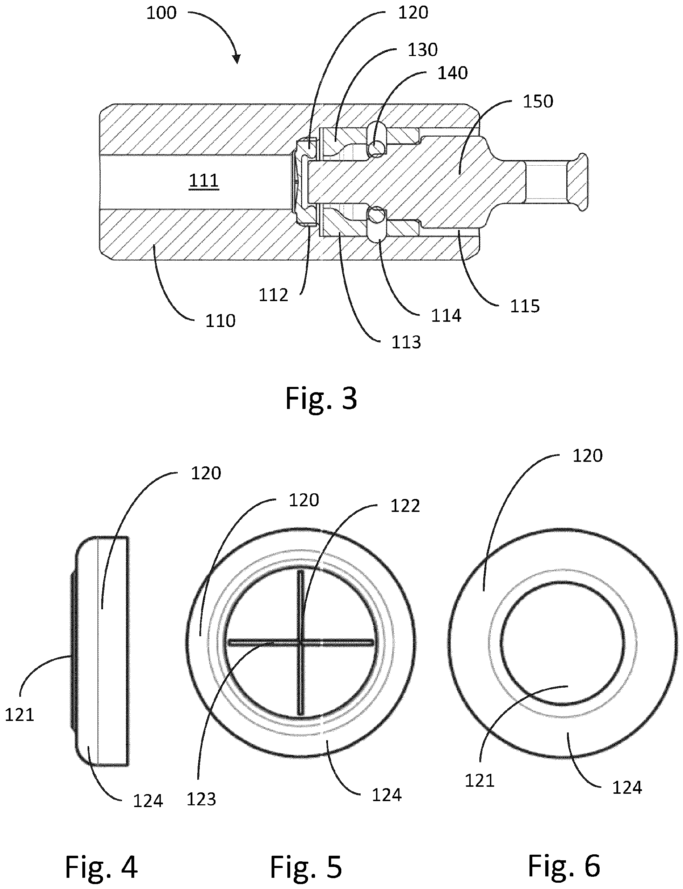

In Fig. 3 ist die Hydraulikleitung 170 noch nicht montiert. In Fig. 3 ist die Gebervorrichtung 100 für die Montage an einem Lenker eines lenkergeführten Fahrzeugs in einem vorbefüllten Zustand dargestellt, wobei anstellen des Leitungsstutzens 160 ein Stopfen 150 in dem Hydraulikanschluss 115 als zusätzliche Transportsicherung angeordnet ist.

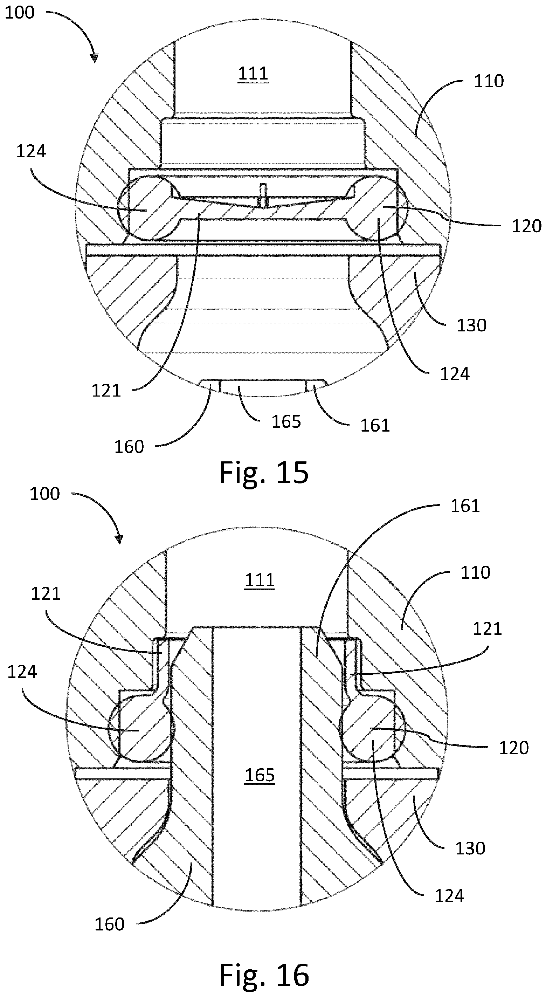

Wie auch in den Figuren 4 bis 6 gezeigt, weist das Ventilschließglied 120 einen umlaufenden Ringabschnitt 124 auf, dessen Ring einen rechteckigen, einen runden und/oder kreisrunden Querschnitt aufweist. Andere geeignete Querschnitte des Ringabschnitts sind denkbar. Auf seiner dem Durchgang 111 zugewandten Seite weist das Ventilschließglied 120 eine Membran 121 auf, die den durch den Ringabschnitt 124 gebildeten Durchgang verschließt. In der Membran 121 sind Rillen 122 und 123 vorgesehen, die als Sollbruchstellen dienen, wenn Druck auf die Membran ausgeübt ist, wie es der Fall ist, wenn der Leitungsstutzen 160 in dem Einsatz 130 eingesetzt und dort mit einer Verriegelungseinrichtung 140, wie in Fig. 1 gezeigt, bzw. in Fig. 14 und Fig. 16 bei einer anderen Ausführung gezeigt, gesichert wird. In dem Gehäuse 110 ist eine Aussparung 118 vorgesehen, die derart angeordnet und ausgebildet ist, dass die Verriegelungseinrichtung 140 leichter eingesetzt werden kann bzw. in dem Gehäuse an einer festen Position gehalten werden kann. Die Stücke der Membran 121 sind dabei in Richtung des Durchgangs 111 ausgerichtet, wie in Fig. 16 gezeigt.

In der Membran 121 können auch Rillen 122, 123 auf beiden Seiten der Membran als Sollbruchstellen vorgesehen sein. Dabei kann die eine Rille 122 auf der einen und die andere Rille 123 auf der anderen Seite der Membran 121 vorgesehen sein. Es können aber auch auf beiden Seiten mehrere Rillen 122, 123 vorgesehen sein. Denkbar ist es auch, die Rillen 122, 123 auf der dem Leitungsstutzen 160 gegenüberliegenden Seite der Membran vorzusehen. Das ist für Ausführungen vorteilhaft, bei denen der Leitungsstutzen nicht so tief in die Gebervorrichtung anordbar ist, dass die Membran reißt, bzw. nicht sicher reißt. Dann kann bei erster Betätigung der Gebervorrichtung bei angeschlossener Hydraulikleitung die Membran durch den bei der Betätigung entstehenden Druck zum Bersten gebracht werden, damit sich das Ventilschließglied 120 öffnet und das System zuverlässig arbeiten kann.

Der Aufbau der Verriegelungseinrichtung 140 ist dem Fachmann beispielsweise aus der DE 10 2019 208 066 A1 bekannt, die in deren gesamter Inhalt in die vorliegende Offenbarung durch Bezugnahme aufgenommen ist.

In Fig. 3 ist in dem Einsatz 130 ein Stopfen 150 angeordnet, der als zusätzliche Transportsicherung dient und der in dem mit Einsatz 130 mit einer Verriegelungseinrichtung 140 gesichert ist, die auch zur Sicherung des Leitungsstutzens 160 in dem Einsatz 130 geeignet ist und so verwendet werden kann. Der Stopfen 150 ist so ausgebildet, dass er das Ventilschließglied 120 nicht berührt bzw. nur so berührt, dass es nicht geöffnet bzw. aufgebrochen wird.

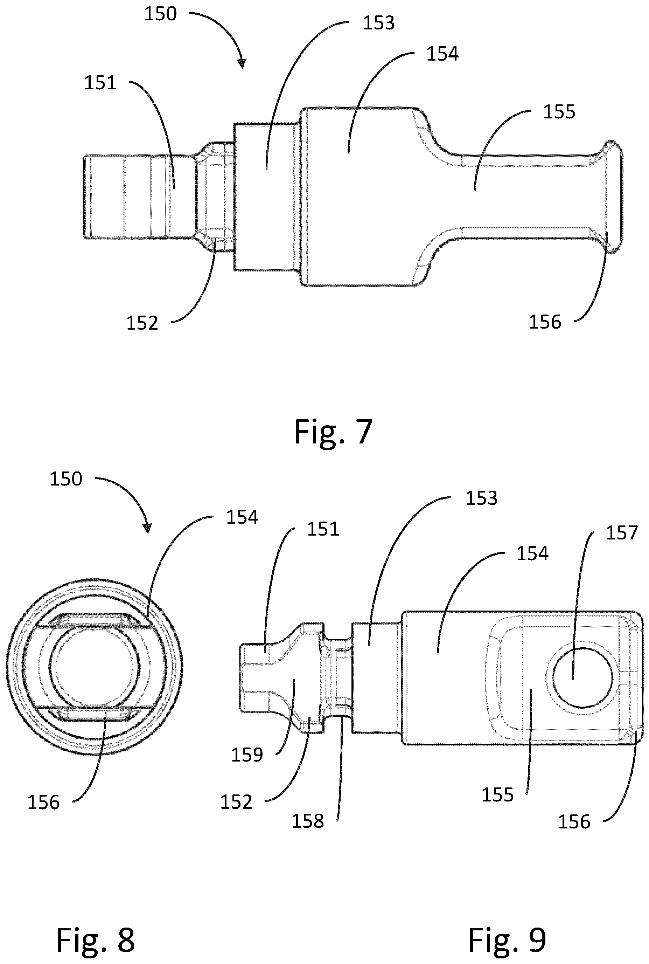

Wie auch in den Figuren 7 bis 9 gezeigt, weist der Stopfen 150 an seinem dem Durchgang 111 zugewandten Ende einen Einsteckabschnitt 151 auf. An diesen schließt sich ein Übergang 152 an, in dem sich der Durchmesser des Stopfens 150 allmählich vergrößert, bis er den Durchmesser im sich daran anschließenden Mittelabschnitt 153 erreicht. Der sich daran anschließende Mittelabschnitt 154 weist einen noch größeren Durchmesser auf. Die Vergrößerung des Durchmesser erfolgt mit einer Stufe. An den Mittelabschnitt 154 schließt sich ein Griffabschnitt 155 mit einem Angriffabschnitt 156 an, an dem ein Benutzer den Stopfen 150 anfassen und aus dem Einsatz 130 zur Montage des Leitungsstutzens 160 mit der daran angeordneten Hydraulikleitung ziehen kann. In dem Griffabschnitt 155 ist ein Durchgang 157 vorgesehen, in den ein Werkzeug eingreifen kann, um den Stopfen bei einer automatisierten Montage leicht handhaben zu können. Damit der Stopfen 150 beim Transport leicht in dem Einsatz gesichert werden kann, weist der Stopfen in Mittelabschnitt 153 einen Eingriffabschnitt 158 auf, in den die Verriegelungseinrichtung 140 zur Sicherung des Stopfens 150 angeordnet werden kann. Im Bereich des Einsteckabschnitts 151 weist der Stopfen 150 eine Abflachung 159 auf, wie in Fig. 9 gezeigt.

Gemäß einer alternativen Ausführung kann bei dem in Fig. 1 gezeigten Gehäuse 110 auch ein Leitungsstutzen 160 angeordnet werden, der derart länger ausgebildet und in der vollständig montierten Stellung derart angeordnet ist, dass Leitungsstutzen 160 das Ventilschließglied 120 durchstochen und damit die Ventileinrichtung durch seine Montage in dem Einsatz 130 geöffnet hat.

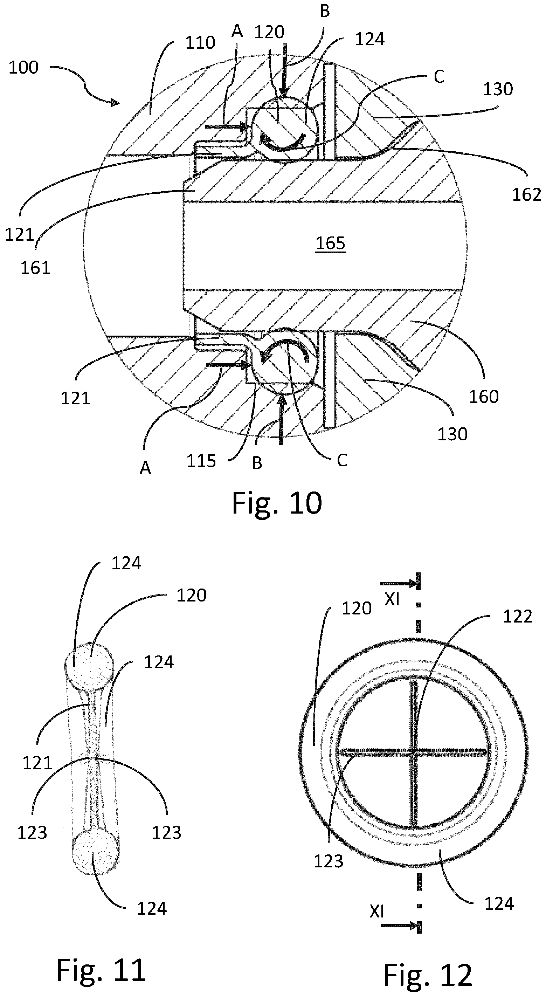

Der Leitungsstutzen 160 weist einen Endabschnitt 161 auf, mit dem der Leitungsstutzen 160 bei der Montage in dem Hydraulikleitungsanschluss 115 die Membran 121 des Ventilschließglieds 120 an den Sollbruchstellen (Rillen 122, 123) durchbricht. Dazu ist er länger als in Fig. 1 gezeigt ausgebildet, d.h. beispielsweise wie in den Figuren 10, 14 und 16 gezeigt. Im Übrigen ist der Leitungsstutzen der alternativen Ausführung und der in Fig. 1 gezeigten Ausführung wie folgt ausgebildet. Im Bereich eines Übergangs 162 vergrößert sich bis zu einem Mittelabschnitt 164 sein Durchmesser. In dem Mittelabschnitt 164 ist ein Eingriffabschnitt 163 für die Verriegelungseinrichtung 140 vorsehen, mit der der Leitungsstutzen 160 in dem Einsatz 130 und damit in dem Hydraulikanschluss 115 gesichert ist. Der Leitungsstutzen 160 weist einen Durchgang 165 auf, der in der Betriebsposition mit der Hydraulikleitung 170 und dem Druckraum der Gebervorrichtung 100 verbunden ist.

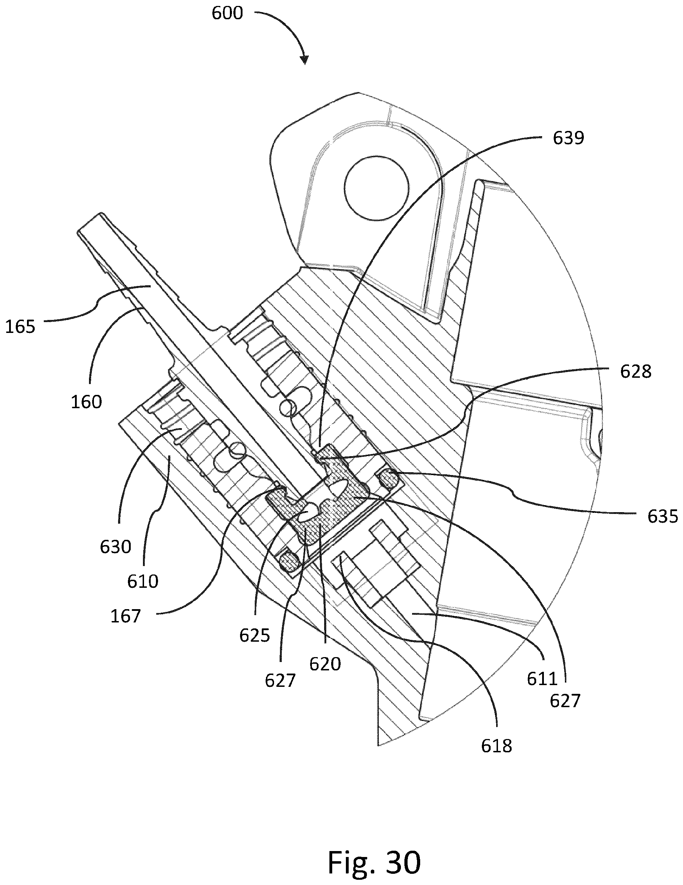

Bei einigen Ausführungen, wie beispielsweise in den Figuren 22 bis 23 bzw. 26 bis 30 gezeigt, kann der Leitungsstutzen 160 in dem Endabschnitt 161 einen Hinterschnitt 167 aufweisen, in den sich das entsprechend ausgebildete Ventilschließglieds 120 einhaken kann, damit es mit dem Leitungsstutzen 160 zurückgezogen werden kann.

Die Ausführung der Figuren 1 und 3bis 9, 2, 10 bis 12 sowie 13 bis 16 bieten den Vorteil, dass eine einfache Integration eines zwangsgeöffneten Rückschlagventils (Ventilschließglied 120) in einen Bremsgeber (Gebervorrichtung 100) für die serienmäßige Integration möglich ist. Durch die Mehrfachfunktion des Ventilschließglieds 120 als Transportsicherung, als zwangsgeöffneten Rückschlagventils bei der Montage des Leitungsstutzens 160 und als Dichtungsglied für den montierten Leitungsstutzen 160 lassen sich Teile- und Montagekosten einsparen. Gleichzeitig ist eine Automatisierbarkeit möglich, was Personalkosten einspart. Eine einfache Vormontage ist möglich, weil das Ventilschließglied 120 in dem Hydraulikanschluss 115 angeordnet und dort mit der Verriegelungseinrichtung 140 gesichert werden kann. Die Gebervorrichtung 100 und die Nehmervorrichtung mit der Hydraulikleitung 170 können getrennt vorbefüllt werden. Bei der Montage beim OEM kann die Membran 121 des Ventilschließglieds 120 beim Montieren des vom Leitungsstutzen 160 zerstört werden.

Die Verriegelungseinrichtung 140 kann unter anderem folgende Funktionen erfüllen. Die Verriegelungseinrichtung 140 kann eine zusätzliche axiale Kraftaufnahme bei der Befestigung des Leitungsstutzens 160 bieten. Ebenso kann die Verriegelungseinrichtung 140 den Leitungsstutzen 160 halten. Weiter kann die Verriegelungseinrichtung 140 den Einsatz 130 halten. Mit dem Einsatz 130 kann die Verriegelungseinrichtung 140 mittelbar das Ventilschließglied 120 und damit die Dichtung für den Leitungsstutzen halten.

Das Ventilschließglied 120 umfasst mit dem Ringabschnitt 124 ein radiales Dichtelement, das den Stopfen 150 gegen das Gehäuse 110 abdichtet. Der Durchgang 111 ist mit der Membran 121 verschlossen, um im Neuzustand einen Mediendurchgang zu unterbinden und das vorbefüllte Hydraulikfluid in der vorbefüllten Gebervorrichtung 100 zu sichern. Die Membran 121 wird beim Stecken eines Verbindungselements, beispielsweise des Leitungsstutzens 160 aufgerissen, um den Mediendurchgang für den zu ermöglichen.

Bei der Ausführung der Figuren 1 und 3 bis 9 besteht eine Fehlermöglichkeit bei der Montage aufgrund der asymmetrischen Ausführung des Ventilschließglied 120 sowie beim Stecken des Leitungsstutzens 160 aufgrund der nicht rotationssymmetrischen Form des Ringabschnitts 124, der auch als Dichtschnur bezeichnet werden kann.

Um diese Fehlermöglichkeiten zu vermeiden, weist die Ausführung der Figuren 10 bis 12 eine andere Gestaltung des Ventilschließglieds 120 auf. Auf die Beschreibung der anderen Ausführungen, insbesondere die Ausführung der Figuren 1 und 3 bis 9 wird daher verwiesen. Im Folgenden werden die Unterschiede beschrieben, die im Wesentlichen in dem Aufbau des Ventilschließglied 120 liegen. Die Membran 121 weist zwar die vorgeschlagene Membran mit Sollbruchstellen auf, sie ist jedoch so gestaltet, dass die Membran 121 mittig in einem 0-Ring- ähnlichen Außenquerschnitt des Ringabschnitts 124 angeordnet ist. Wegen der symmetrischen Anordnung der Membran 121 ist es gleichwertig, ob das Ventilschließglied 120 mit der einen oder der anderen Seite in Richtung des Durchgangs 111 montiert wird. Damit ist ein lagerichtiger Verbau bei der Montage gewährleistet. Eine Überwachung der richtigen Einbaulage kann somit entfallen.

Der Außenquerschnitt der Dichtschnur bzw. des Ringabschnitts 124 ist ähnlich wie bei einem O-Ring, der keine Membran aufweist, rotationssymmetrisch ausgeführt. Das hat den Vorteil, dass bei der Anordnung des Ventilschließglieds 120 in dem Hydraulikanschluss 115, ohne dass der Leitungsstutzen 160 montiert wird, eine axiale Verpressung des Außenquerschnittes des Ringabschnitts 124 zwischen dem Gehäuse 110 und dem Einsatz 130 erfolgen kann, d.h. dass eine Kraft entlang Pfeil A von Fig. 10 erfolgen kann. Der Ringabschnitt 124 weist herstellungsbedingt in der Regel einen Trenngrat auf. Vorzugsweise kann der Ringabschnitt 124 so montiert werden, dass der Trenngrat nicht im Bereich der Dichtflächen zwischen dem Gehäuse 110 und dem Leitungsstutzen 160 liegt, wenn der Leitungsstutzen 160, wie in Fig. 10 gezeigt montiert worden ist und die Membran 121 zerstört wurde. Das liegt daran, dass die Membran 121 beim Stecken des Leitungsstutzens 160 an den Sollbruchstellen (Rillen 122, 123) aufgerissen und der Mediendurchgang ermöglicht wird. Hierbei kann sich der Außenquerschnitt des Ringabschnitts 124 (beispielsweise die O-Ring Schnur) wie in Fig. 10 mit dem Pfeil C angedeutet (d.h. in Fig. 10 im Uhrzeigersinn) verdrehen. Dabei entsteht eine radiale Verpressung des Ringabschnitts 124 zwischen dem Gehäuse 110 und dem Leitungsstutzens 160, wie durch die Kraft B in Fig. 10 angedeutet, die die Richtung der Verpressung angibt. Damit dreht sich der Trenngrat des Ventilschließglieds 120 aus der Dichtfläche heraus.

Bei der Ausführung der Figuren 10 bis 12 ist ebenso wie bei den anderen Ausführungen auf die Abstimmung der axialen Klemmkraft (Fig. 10, Pfeil A) zwischen dem Gehäuse 110 und dem Einsatz 130, beispielsweise eine Hülse, und die daraus resultierende Reibkraft für die Verdrehung des Ventilschließglieds 120 (mit der Membran 121) beim Einstecken des Leitungsstutzens 160 zu achten.

Ebenso ist darauf zu achten, dass beim Durchstoßen der Membran 121 sichergestellt werden muss, dass sich kein Stück von der Membran 121 Ventilschließglieds 120 löst und sich frei vagabundierend im Hydraulikmedium bewegen kann.

Fig. 2 zeigt eine Ausführung, die im Wesentlichen den Ausführungen der Figuren 1 und 3 bis 9 bzw. 10 bis 12 entspricht, auf deren Beschreibung verwiesen wird. Im Folgenden werden die Unterschiede beschrieben. Der Einsatz 130 kann derart ausgebildet sein, dass er in dem Hydraulikanschluss innen einrastet, wie beispielsweise bei der Ausführung von Fig. 2 dargestellt, bei denen der Einsatz 130 einen Vorsprung 131 aufweist, der in eine Aussparung 117 einrastet, die in dem Gehäuse 110 vorgesehen. Das hat den Vorteil, dass der Einsatz 130 in dem Gehäuse verliersicher montiert werden kann.

Die Figuren 13 bis 16 zeigen eine Ausführung, die im Wesentlichen den Ausführungen der Figuren 1 und 3 bis 9, bzw. 2, bzw. 10 bis 12 entspricht, auf deren Beschreibung verwiesen wird. Im Folgenden werden die Unterschiede beschrieben. Bei dieser Ausführung ist die Hydraulikleitung 170 dargestellt, die an dem Leitungsstutzen auf einer dem Fachmann bekannten Weise befestigt ist. Das Ventilschließglied 120 weist eine mittig zum Ringabschnitt 124 angeordnete Membran 121 auf, die entsprechend der Fig. 12 auf einer oder beiden Seiten Rillen 122, 123 als Sollbruchstellen aufweisen kann.

Die Figuren 17 bis 19 zeigen eine Ausführung, die im Wesentlichen den Ausführungen der Figuren 1 und 3 bis 9 bzw. 2 bzw. 10 bis 12 bzw. 13 bis 16 entspricht, auf deren Beschreibung verwiesen wird. Dabei bezeichnen sich entsprechende Bezugszeichen entsprechende Bauteile bzw. Merkmale, wobei einige um 100 erhöht sind. Im Folgenden werden die Unterschiede beschrieben. Das Ventilschließglied 220 ist derart ausgebildet, dass es bei der Montage des Leitungsstutzens 160 nicht zerstört wird, sondern in Richtung des Durchgangs 211 verschoben wird, so dass eine Fluidverbindung zwischen dem Durchgang 165 und dem Druckraum der Gebervorrichtung 200 geschaffen wird, wenn der Leitungsstutzen 160 in der Betriebsposition ist.

Der Durchgang 211 zum Druckraum weist Überströmkanäle 216 auf. Das Ventilschließglied 220 weist einen Ringabschnitt 224 auf, in dem der Endabschnitt 161 des Leitungsstutzens 160 angeordnet ist. In dem Ventilschließglied 220 ist ein Durchgang 225 vorgesehen. Der Durchgang 165 des Leitungsstutzens 160 steht mit dem Durchgang 225 des Ventilschließglieds 225 in Verbindung. Das Ventilschließglied 220 weist in Richtung des Durchgangs 211 einen Fortsatz 226 auf, an dem ein Dichtungsabschnitt 227 vorgesehen ist, der beispielsweise als Dichtlippe ausgebildet sein kann. In dem Gehäuse 210 ist eine Federeinrichtung 270 vorgesehen, die das Ventilschließglied 220 in Richtung des Leitungsstutzens 160 vorspannt. In der in Fig. 17 gezeigten Stellung ist der Leitungsstutzen 160 nicht vollständig in dem Einsatz 230 geschoben, d.h. der Leitungsstutzen 160 hat seine Betriebsposition noch nicht erreicht. Der Dichtungsabschnitt 227 des Ventilschließglied 220 liegt an der Wandung des Durchgangs 211 in einem Bereich an, wo keine Überströmkanäle 216 sind, d.h. dass die Ventileinrichtung geschlossen ist und keine Fluidverbindung zwischen Druckraum und Hydraulikanschluss 215 bzw. dem Durchgang 165 besteht. Es ist klar, dass anstelle des Leitungsstutzens 160 auch der Stopfen 150, wie in den Figuren 1 bis 9 gezeigt, in dem Hydraulikanschluss für den Transport angeordnet und mit der Verriegelungseinrichtung 140 gesichert werden kann, ohne eine Fluidverbindung zwischen Druckraum und Hydraulikanschluss 215 bzw. dem Durchgang 165 herzustellen. Fig. 18 zeigt die Betriebsposition, bei der der Leitungsstutzens 160 entgegen Kraft der Federeinrichtung 270 weiter in den Hydraulikanschluss 215 geschoben wurde und mit der Verriegelungseinrichtung 140 gesichert ist. Ventilschließglied 220 wurde dabei soweit in Fig. 18 nach links verschoben, dass der Dichtungsabschnitt 227 des Ventilschließglied 220 in einem Bereich an der Wandung des Durchgangs 211 anliegt, in dem die Überströmkanäle 216 ausgebildet sind, so dass eine Fluidverbindung zwischen Druckraum und Hydraulikanschluss 215 bzw. dem Durchgang 165 hergestellt worden ist. Die Gebervorrichtung kann somit betätigt und Druck über die Hydraulikleitung an den Nehmer übertragen werden.

Die Figuren 20 bis 21 zeigen eine Ausführung, die im Wesentlichen den Ausführungen der Figuren 1 und 3 bis 9 bzw. 2 bzw. 10 bis 12 bzw. 13 bis 16 bzw. 17 bis 19 entspricht, auf deren Beschreibung verwiesen wird. Dabei bezeichnen sich entsprechende Bezugszeichen entsprechende Bauteile bzw. Merkmale, wobei einige um 100 bzw. 200 erhöht sind. Im Folgenden werden die Unterschiede beschrieben. Bei dieser Ausführung ist das Ventilschließglied 320 im Wesentlichen entsprechend dem Ventilschließglied 220 ausgebildet, d.h. mit einem Durchgang 325 und einem Fortsatz 326, an dem ein Dichtungsabschnitt 327 ausgebildet ist. Der Einsatz 330 ist aber derart in dem Gehäuse 300 angeordnet, dass er das Ventilschließglied 320 in allen Positionen aufnimmt. Die Innenkontur des Einsatzes 300 kann entsprechend mit Überströmkanälen ausgebildet sein. In den Figuren ist eine Variante gezeigt, in der der Einsatz 330 zwei Abschnitte mit unterschiedlichem Innendurchmesser aufweist, d.h. einen Abschnitt 332 mit geringerer lichter Weite, der in den Figuren 20 und 21 rechts dargestellt ist, und einen Abschnitt 334 mit größerer lichter Weite, der in den Figuren 20 und 21 links dargestellt ist. Zwischen diesen Abschnitten kann ein Übergangsabschnitt 333 vorgesehen sein, der für einen geringeren Verschleiß des Dichtungsabschnitts 327 sorgen kann. Befindet sich der Dichtungsabschnitt 327 in dem Abschnitt 332 mit geringerer lichter Weite, wie in Fig. 20 gezeigt, ist die Ventileinrichtung verschlossen. Der Einsatz 330 weist einen Flansch 339 an dem in Fig. 20 rechten Ende des Abschnitts 332 mit geringerer lichter Weite auf, an dem sich das Ventilschließglied 320 in der geschlossenen Stellung abstützen kann, wodurch die Gefahr einer Verformung des Ventilschließglieds 320 und damit eine Undichtigkeit bzw. ein Hydraulikverlust reduziert werden kann. Bei dieser Ausführung kann wie oben erläutert auch ein Stopfen 150 anstelle des Leitungsstutzens 160 vorgesehen werden.

Befindet sich der Dichtungsabschnitt 327 in dem Abschnitt 334 mit größerer lichter Weite, wie in Fig. 21 gezeigt, ist die Ventileinrichtung offen und die Gebervorrichtung kann betätigt werden. Bei dieser Ausführung erfüllt der Dichtungsabschnitt 327 anders als bei der Ausführung der Figuren 17 bis 19 keine Doppelfunktion betreffend der Dichtung des Hydraulikweges. Daher muss eine weitere Dichtung vorgesehen werden, um den Einsatz 330 gegenüber dem Gehäuse 310 abzudichten. Dazu ist ein Dichtungsglied 335 vorgesehen, wie in den Figuren 20 und 21 gezeigt.

Die Figuren 22 bis 23 zeigen eine Ausführung, die im Wesentlichen den Ausführungen der Figuren 1 und 3 bis 9 bzw. 2 bzw. 10 bis 12 bzw. 13 bis 16 bzw. 17 bis 19 bzw. 20 bis 21 entspricht, auf deren Beschreibung verwiesen wird. Dabei bezeichnen sich entsprechende Bezugszeichen entsprechende Bauteile bzw. Merkmale, wobei einige um 100 bzw. 200 bzw. 300 erhöht sind. Im Folgenden werden die Unterschiede beschrieben. Bei dieser Ausführung ist das Ventilschließglied 420 im Wesentlichen entsprechend dem Ventilschließglied 220 bzw. 320 ausgebildet, d.h. mit einem Durchgang 425 und einem Fortsatz 426, an dem ein Dichtungsabschnitt 427 ausgebildet ist. Der Einsatz 430 ist derart in dem Gehäuse 400 angeordnet, dass er das Ventilschließglied 420 in den Positionen aufnimmt, wenn die Ventileinrichtung geschlossen ist. In dem Einsatz 430 ist ein Sicherungsring 429 vorgesehen, der sich an einem Flansch 439 in Fig. 22 nach rechts, d.h. gegen einen Systemdruck in dem nicht dargestellten Druckraum abstützt. Das Ventilschließglied 420 wird durch den Systemdruck gegen den Sicherungsring 429 und somit gegen den Flansch 439 des Einsatzes in die geschlossene Stellung gedrückt. Zum Öffnen der Ventileinrichtung fährt Ventilschließglied 420 wie in Fig. 23 gezeigt nach links aus dem Einsatz 430 heraus. Das Öffnen erfolgt dadurch, dass der Leitungsstutzen 160 in Fig. 23 nach links in den Einsatz 430 geschoben wird. Der Leitungsstutzen 160 weist einen Flansch 169 auf, dessen Außendurchmesser kleiner gleich dem Innendurchmesser des Flansches 439 des Einsatzes 430 ist. Sobald der Flansch 169 weiter als der Flansch 439 in Fig. 23 nach links geschoben wird, stützt sich der Sicherungsring 429 an dem Flansch 169 ab und wird durch die weitere Bewegung des Leitungsstutzens 160 weiter in Fig. 23 nach links bewegt. Bei dieser weiteren Bewegung schiebt des Sicherungsring 429 das Ventilschließglied 420 aus dem Einsatz 430 bis in die in Fig. 23 gezeigte Stellung hinaus, in der die Ventileinrichtung geöffnet ist. Anstelle der Federeinrichtung ist ein Anschlag 418 und eine formschlüssige Verbindung zwischen dem Leitungsstutzen 160 und dem Ventilschließglied 420 vorgesehen. In der in Fig. 23 gezeigten Stellung, in der die Ventileinrichtung geöffnet ist, stützt sich das Ventilschließglied 420 an dem Anschlag 418 ab. Um die formschlüssige Verbindung zwischen dem Leitungsstutzen 160 und dem Ventilschließglied 420 auszubilden, weist das Ventilschließglied 420 einen Vorsprung 428 auf, der in einen Hinterschnitt 167 eingreift, der an dem Endabschnitt 161 des Leitungsstutzens ausgebildet ist. Der Einsatz 430 weist einen Vorsprung 431 auf, der in eine Aussparung 417 eingreift, die in dem Gehäuse 410 ausgebildet ist, so dass eine Abstützung des Einsatzes 430 in dem Gehäuse geschaffen wird, die dem Systemdruck bei der Betätigung der Gebervorrichtung 400 entgegenwirkt. Der Einsatz 430 ist mit dem Dichtungsglied 435 gegenüber dem Gehäuse 410 abgedichtet. Diese Ausführung hat den Vorteil, dass sich das Ventilschließglied 420 sowohl in der geschlossenen Stellung der Ventileinrichtung (Fig. 22) als auch in der geöffneten Stellung der Ventileinrichtung (Fig. 23) an dem Sicherungsring 429 abstützen kann. Dadurch kann sich das Ventilschließglied 420 nicht weiter durch den Systemdruck nach außen (in Fig. 23 nach rechts) bewegen oder in diese Richtung verformt werden. Das ist sowohl im normalen Betrieb, in der die Ventileinrichtung in der geöffneten Stellung ist (Fig. 23), als auch in einer Transportstellung vorteilhaft, in der die Ventileinrichtung in der geschlossenen Stellung ist (Fig. 22). Die Ausführung der Figuren 20 und 21 schafft ebenfalls eine Abstützung des Ventilschließglied 320 an einem Flansch 339 in der geschlossenen Stellung der Ventileinrichtung (Fig. 20) so dass bei den Ausführungen die Gefahr einer Undichtigkeit bzw. ein Verlust von Hydraulikfluid bei einer ggf. unbeabsichtigten Betätigung in der geschlossenen Stellung reduziert wird. Das ist insbesondere vorteilhaft für vorbefüllte hydraulische Gebervorrichtungen, die in einer geschlossenen Stellung der Ventileinrichtung an Erstausrüster ausgeliefert und dort montiert werden sollen. Die Ausführung der Figuren 22 bis 23 hat den Vorteil, dass zusätzlich eine Abstützung des Ventilschließglieds 420 in der geöffneten Stellung an dem Sicherungsring 419 erfolgt, so dass auch im normalen Betrieb die Gefahr einer Undichtigkeit bzw. ein Verlust von Hydraulikfluid bei der Betätigung der Gebervorrichtung reduziert wird.

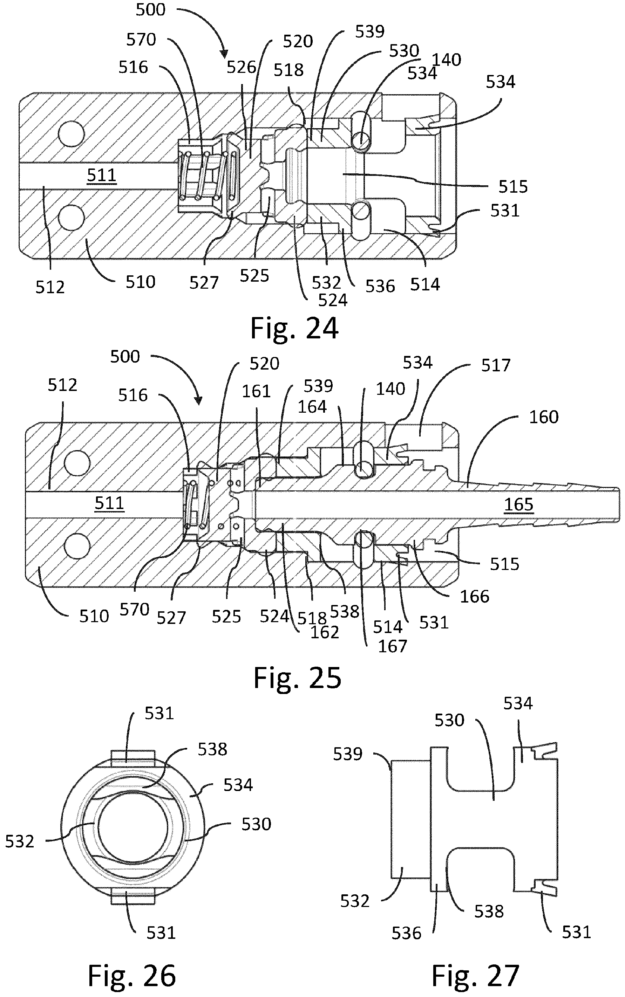

Die Figuren 24 bis 27 zeigen eine Ausführung, die im Wesentlichen den Ausführungen der Figuren 1 und 3 bis 9 bzw. 2 bzw. 10 bis 12 bzw. 13 bis 16 bzw. 17 bis 19 bzw. 20 bis 21 bzw. 22 bis 23 entspricht, auf deren Beschreibung verwiesen wird. Dabei bezeichnen sich entsprechende Bezugszeichen entsprechende Bauteile bzw. Merkmale, wobei einige um 100 bzw. 200 bzw. 300 bzw. 400 erhöht sind. Im Folgenden werden die Unterschiede beschrieben. Bei dieser Ausführung entspricht der Aufbau des Ventilschließglieds 520 dem Aufbau des Ventilschließglieds 220 der in den Figuren 17 bis 19 gezeigten Gebervorrichtung 200. Der Unterschied der Gebervorrichtung 500 zu der Gebervorrichtung besteht im Wesentlichen in der Ausgestaltung des Einsatzes 530 und der entsprechenden Änderungen des Gehäuses 510. Der Einsatz 530 weist einen Abschnitt 532 mit geringerer lichter Weite auf, der in den Figuren 24, 25 und 27 auf der linken Seite dargestellt ist. Auf der gegenüberliegenden Seite weist der Einsatz 530 einen Abschnitt 534 mit größerer lichter Weite auf, der in den Figuren 24, 25 und 27 auf der rechten Seite dargestellt ist. In Fig. 26 sieht der Betrachter auf den Abschnitt 534. An dem Abschnitt 534 mit größerer lichter Weite sind oben und unten Aussparungen ausgebildet, in denen jeweils ein Vorsprung 531 vorgesehen ist, der in eine oder mehrere Aussparungen 517 eingreifen kann, um den Einsatz 530 in dem Gehäuse 510 verliersicher aufzunehmen. An dem Abschnitt 532 mit geringerer lichter Weite ist an der linken Seite ein Flansch 539 vorgesehen, an dem sich das Ventilschließglied 520 mit seinem Ringabschnitt 524 sowohl in der geschlossenen Stellung (Fig. 24) als auch der geöffneten Stellung (Fig. 25) gegen eventuellen Systemdruck abstützen kann, der beispielsweise bei einer ggf. unbeabsichtigten oder beabsichtigten Betätigung der Gebervorrichtung 500 in dem Druckraum der Gebervorrichtung 500 aufgebaut werden kann. Die Federeinrichtung 570 spannt das Ventilschließglied 520 ebenfalls gegen den Anschlag 539 des Einsatzes 530. Der Abschnitt 532 mit geringerer lichter Weite weist einen Flansch 536 auf, dessen Durchmesser dem Abschnitt 534 mit größerer lichter Weite entspricht. Der Flansch 536 weist an seiner dem Leitungsstutzen 160 zugewandten Seite einen Anschlagsbereich 538 auf, an dem sich der Leitungsstutzen 160 abstützen kann. Zusätzlich oder alternativ kann der Leitungsstutzen einen Flansch 166 aufweisen, wie in Fig. 25 gezeigt, an dem sich der Einsatz 530 mit seinem Abschnitt 534 mit größerer lichter Weite abstützen kann, und zwar mit seinem innerhalb des Vorsprungs 531 liegenden Bereich. Durch den Formschluss zwischen dem Leitungsstutzen 160 und dem Einsatz 530, der durch zumindest eine der beiden Abstützungen oder bevorzugt durch beide Abstützungen gebildet wird, kann der Einsatz 530 von der Stellung in Fig. 24, bei der sich der Einsatz 530 mit dem Vorsprung 531 in der Aussparung 517 nach links gegen das Gehäuse abstützt, nach rechts in die Stellung von Fig. 25 geschoben werden, in der der Leitungsstutzen 160 in seiner vollständig montierten Stellung angeordnet ist, und das Ventilschließglied 520 die Ventileinrichtung geöffnet hat, d.h. dass der Dichtungsabschnitt 527 über die Überströmkanäle 516 geschoben worden ist und die Verbindung zwischen dem Durchgang 511 über den Durchgang 525 in dem Ventilschließglied 520 zu dem Durchgang 165 in dem Leitungsstutzen geschaffen worden ist, damit die Gebervorrichtung 500 betätigt werden kann. Das Gehäuse 510 weist eine Stufe 516 auf, an der sich der Einsatz 503 mit einem Flansch 536 abstützen kann, wenn der Einsatz 530 durch das Einsetzen des Leitungsstutzens 160, wie in Fig. 25 gezeigt, vollständig nach links in den Hydraulikanschluss 515 eingeführt ist, so dass eine weitere Verlagerung des Einsatzes 530 in den Hydraulikanschluss 515 verhindert wird. In der in Fig. 25 gezeigten Stellung ist der Leitungsstutzen 160 mit der Verriegelungseinrichtung 140 gesichert.

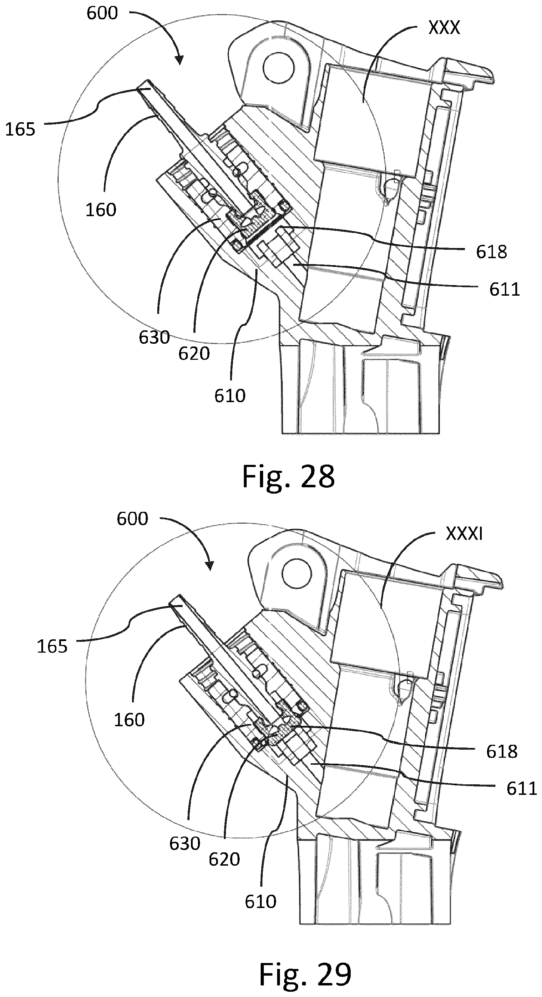

Die Figuren 28 bis 32 zeigen eine Ausführung, die im Wesentlichen den Ausführungen der Figuren 1 und 3 bis 9 bzw. 2 bzw. 10 bis 12 bzw. 13 bis 16 bzw. 17 bis 19 bzw. 20 bis 21 bzw. 22 bis 23 bzw. 24 bis 27 entspricht, auf deren Beschreibung verwiesen wird. Dabei bezeichnen sich entsprechende Bezugszeichen entsprechende Bauteile bzw. Merkmale, wobei einige um 100 bzw. 200 bzw. 300 bzw. 400 bzw. 500 erhöht sind. Im Folgenden werden die Unterschiede beschrieben. Die Ausführung der Figuren 28 bis 32 kommt der Ausführung der Figuren 22 bis 23 am nächsten, wobei das Gehäuse 610 der Gebervorrichtung zur Montage an einem Lenker eines Lenkergeführten Fahrzeugs ausgelegt ist. Der Leitungsstutzen 160 ist im Wesentlichen entsprechend der Ausführung der Figuren 22 bis 23 ausgebildet. Das Ventilschließglied 620 ist im Wesentlichen entsprechend dem Ventilschließglied 420 der Ausführung der Figuren 22 bis 23 ausgebildet. Der Anschlag 618 entspricht dem Anschlag 418 der Ausführung der Figuren 22 bis 23.

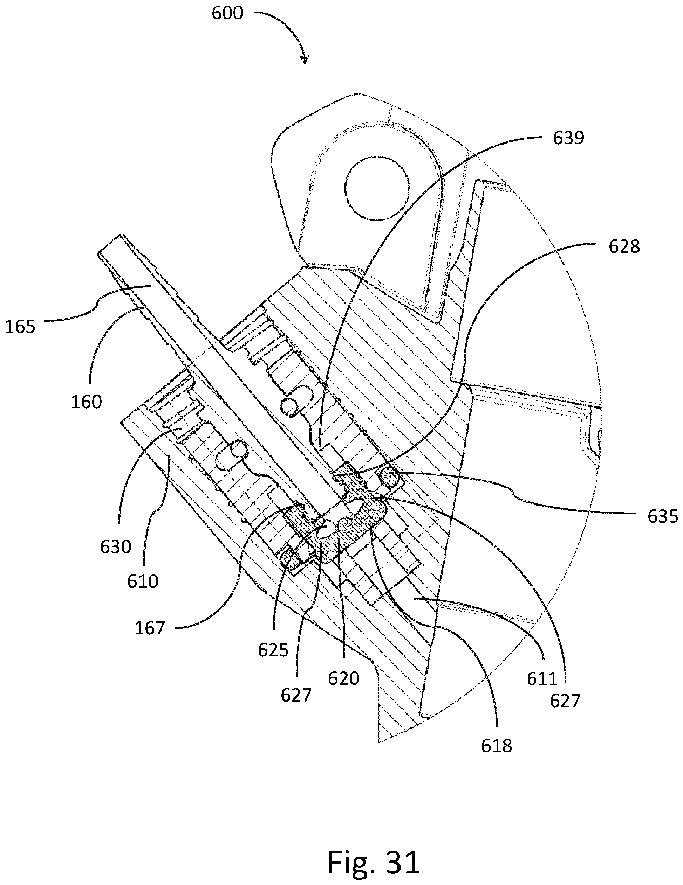

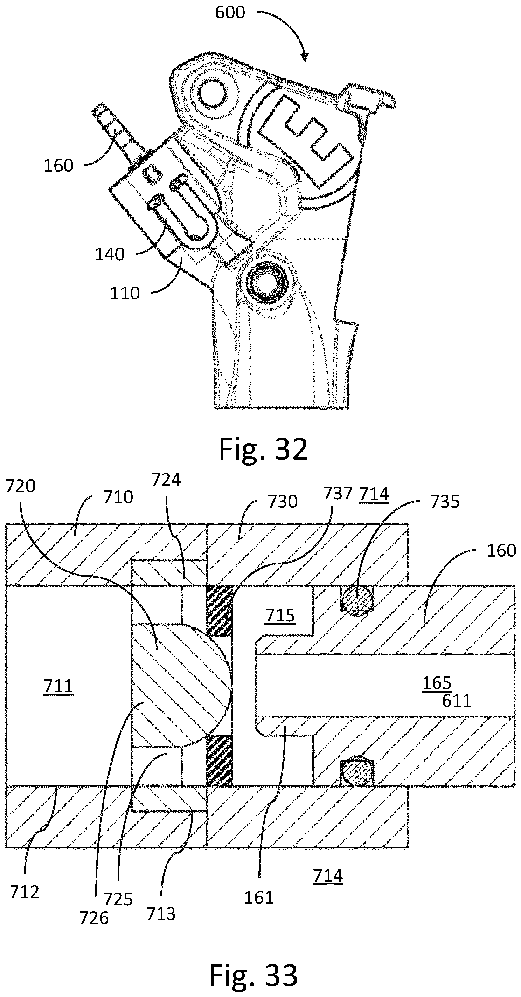

Figur 33 zeigt eine Ausführung, die im Wesentlichen den Ausführungen der Figuren 1 und 3 bis 9 bzw. 2 bzw. 10 bis 12 bzw. 13 bis 16 bzw. 17 bis 19 bzw. 20 bis 21 bzw. 22 bis 23 bzw. 26 bis 30 entspricht, auf deren Beschreibung verwiesen wird. Dabei bezeichnen sich entsprechende Bezugszeichen entsprechende Bauteile bzw. Merkmale, wobei einige um 100 bzw. 200 bzw. 300 bzw. 400 bzw. 500 bzw. 600 erhöht sind. Das Ventilschließglied 720 weist Durchgänge 725 auf, die zwischen einen Mittelabschnitt 726 und einem Ringabschnitt 724 vorgesehen sind. Das Ventilschließglied 720 ist mit dem Ringabschnitt 728 zwischen dem Einsatz 130 und dem Gehäuse 110 in dem Hydraulikanschluss 115 eingeklemmt. Das Ventilschließglied 720 ist derart angeordnet und ausgelegt, dass der Mittelabschnitt 726 gegen einen Ventilsitz 737 des Einsatzes 130 gespannt ist, was durch den Systemdruck der Gebervorrichtung unterstützt wird. Wenn der Leitungsstutzen, wie in Fig. 31 gezeigt nicht bis in die Betriebsposition in den Hydraulikanschluss 115 eingeführt ist, ist die Ventileinrichtung geschlossen, so dass keine Fluidverbindung zwischen Druckraum und Durchgang 165 bzw. dem Hydraulikanschluss 115 vorhanden ist. Der Leitungsstutzen 160 ist mit einem Dichtungsglied 136 gegen den Einsatz 130 abgedichtet. Wenn der Leitungsstutzen 160 in den Hydraulikanschluss 115 bis in die Betriebsposition geschoben wird (in Fig. 31 nach links), berührt der Leitungsstutzen 160 mit seinem Endabschnitt 161 den Mittelabschnitt 725 des Ventilschließglieds 720 und schiebt den Mittelabschnitt außer Eingriff mit dem Ventilsitz 137. Die Ventileinrichtung wird geöffnet. Damit der Durchgang 165 mit dem Druckraum fluidverbunden ist, weist der Endabschnitt 161 an seiner Spitze vorzugsweise Überströmkanäle auf, durch die Hydraulikfluid bei der Betätigung der Gebervorrichtung aus dem Druckraum in die Hydraulikleitung strömen kann.

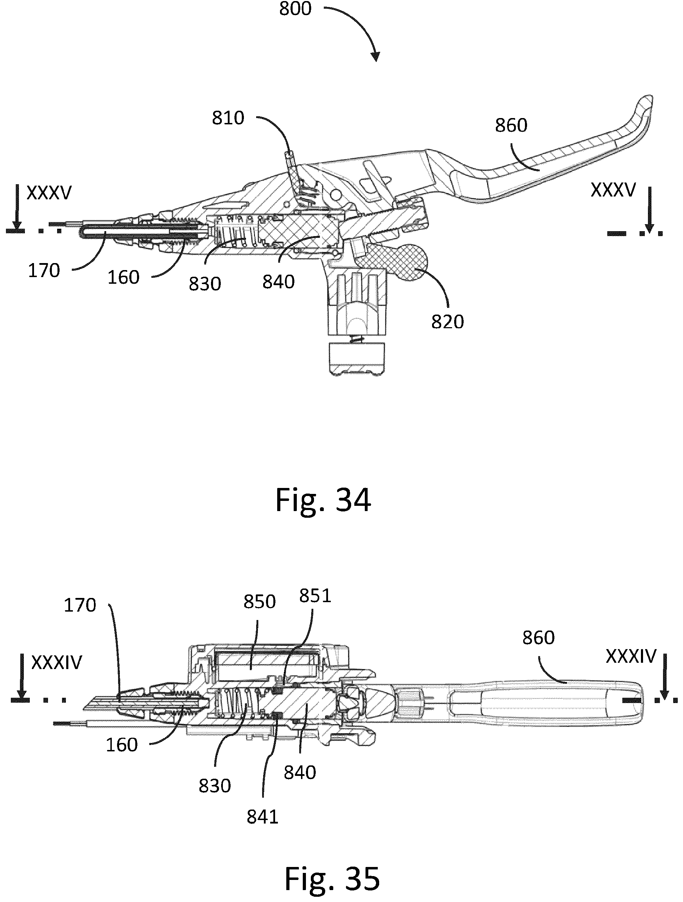

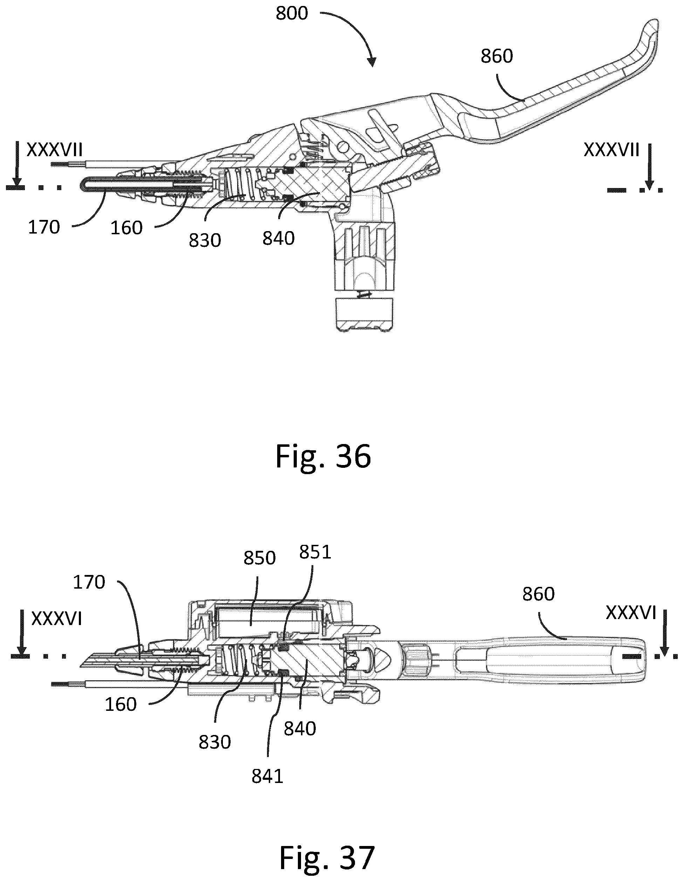

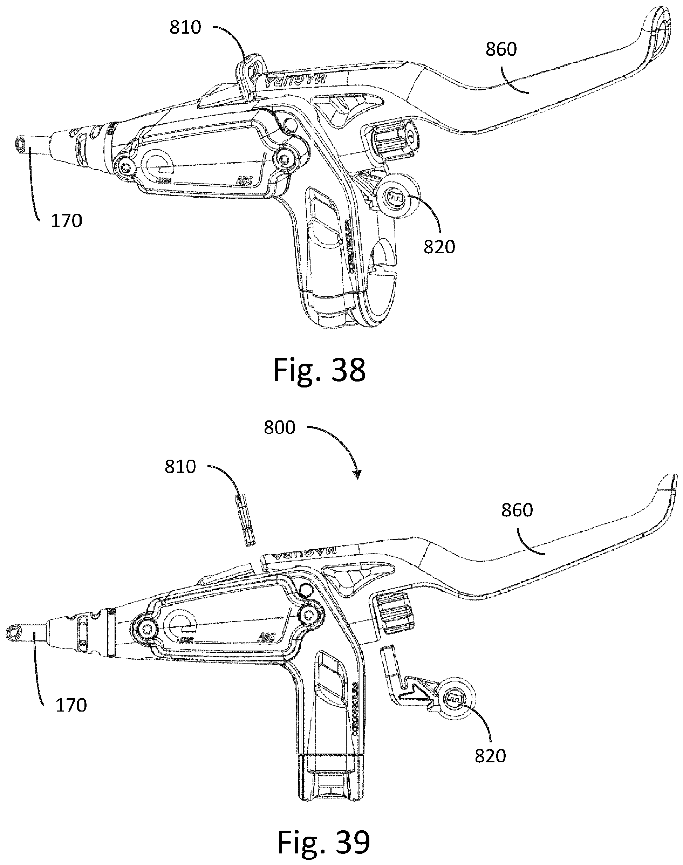

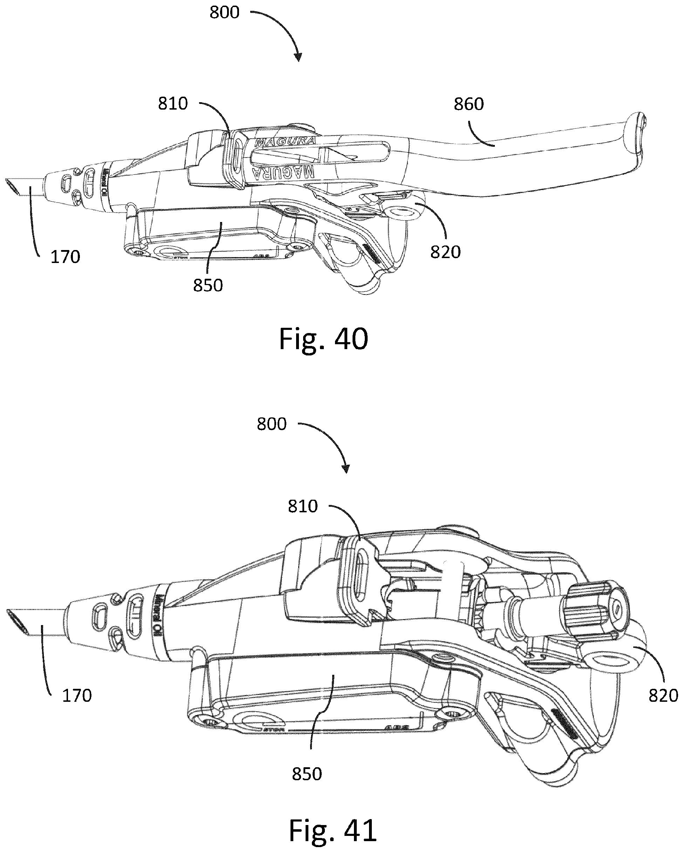

Die Figuren 34 bis 41 zeigen eine Ausführung, die im Wesentlichen den Ausführungen der Figuren 1 und 3 bis 9 bzw. 2 bzw. 10 bis 12 bzw. 13 bis 16 bzw. 17 bis 19 bzw. 20 bis 21 bzw. 22 bis 23 bzw. 24 bis 27 bzw. 28 bis 32 bzw. 33 entspricht, auf deren Beschreibung verwiesen wird. Dabei bezeichnen sich entsprechende Bezugszeichen entsprechende Bauteile bzw. Merkmale, wobei einige um 100 bzw. 200 bzw. 300 bzw. 400 bzw. 500 bzw. 600 bzw. 700 erhöht sind.

Die Gebervorrichtung 800 der Figuren 34 bis 41 weist einen Hebel 860 zur Betätigung der Gebervorrichtung 800 und einen Ausgleichsbehälter 850 für Hydraulikfluid auf. In dem Gehäuse ist ein Kolben 840 verschiebbar angeordnet, um bei Betätigung des Hebels auf dem Fachmann bekannte Weise Druck in dem System aufzubauen, damit eine Nehmervorrichtung hydraulisch betätigt werden kann. Die Gebervorrichtung 800 weist eine Ausgleichsöffnung 851 aufweist, die am Anfang der der Betätigung der Gebervorrichtung 800 von der Dichtung 841 des Kolbens 840 überfahren wird, um die Verbindung zwischen dem Ausgleichsbehälter 850 und einem Druckraum zu unterbrechen. Bei einer weiteren Betätigung der Gebervorrichtung kann sich dann Druck in dem System aufbauen. Die Gebervorrichtung 800 weist eine erste Transportsicherung 820 auf, die derart ausgebildet und angeordnet ist, dass der Hebel 860 gegen eine Betätigung gesichert ist. Dadurch kann erreicht werden, dass kein Verlust von Hydraulikfluid durch eine unbeabsichtigte Betätigung der Gebervorrichtung passieren kann. Bei den bekannten Gebervorrichtung mit einer Transportsicherung besteht aber der Nachteil, dass noch eine Verbindung zwischen dem Ausgleichsbehälter 850 und dem Druckraum der Gebervorrichtung 800 besteht, so dass sich beim Transport Schaum in dem System bilden kann, wenn Hydraulikfluid von dem System in den Ausgleichsbehälter und von dem Ausgleichsbehälter in das System ohne Druckaufbau bewegt. Um die Schaumbildung zu reduzieren, weist die die Gebervorrichtung 800 eine zweite Transportsicherung 810 auf, die derart ausgebildet und angeordnet ist, dass der Hebel 860 in einer teilbetätigten Stellung gehalten wird, in der die Dichtung 841 des Kolbens 840 die Ausgleichsöffnung 851 überfahren hat. Die zweite Transportsicherung 810 kann, wie in den Figuren 34 bis 41 gezeigt, keilförmig ausgebildet sein und zwischen dem Gehäuse und dem Hebel 860 angeordnet werden, so dass der Hebel 860 in einer teilbetätigten Stellung ist. Davor oder danach bzw. gleichzeitig kann die erste Transportsicherung 820 an der Gebervorrichtung angeordnet werden, vorzugsweise derart, dass jegliche Bewegung des Hebels unterbunden wird. Dabei kann der Hebel zwischen der ersten Transportsicherung 820 und der zweiten Transportsicherung 810 eingeklemmt werden.

Die Ausführungen der Erfindung sind vorzugsweise derart ausgelegt, dass sie einem Druck von bis zu 200 bar standhalten. Die Fortsätze, die den Einsatz in dem Gehäuse sichern, sind vorzugsweise auch so ausgelegt, dass sie einem Druck von bis zu 200 bar standhalten. Wie ausgeführt kann durch die Abstützung über die Verriegelung mit der Verriegelungseinrichtung 140 bzw. dem Clip Druck abgefangen werden. Eine solche Abstützung ist für Hinterschnitte in Kunststoffteilen und eine leichte bzw. einfache Montierbarkeit vorteilhaft.

Selbstverständlich ist die Erfindung nicht auf die dargestellten Ausführungsformen beschränkt. Die vorstehende Beschreibung ist daher nicht als beschränkend, sondern als erläuternd anzusehen. Die nachfolgenden Ansprüche sind so zu verstehen, dass ein genanntes Merkmal in zumindest einer Ausführungsform der Erfindung vorhanden ist. Dies schließt die Anwesenheit weiterer Merkmale nicht aus. Sofern die Ansprüche und die vorstehende Beschreibung "erste" und "zweite" Ausführungsformen definieren, so dient diese Bezeichnung der Unterscheidung zweier gleichartiger Ausführungsformen, ohne eine Rangfolge festzulegen.
die Dichtung 841 des Kolbens 840 die Ausgleichsöffnung 851 überfahren hat. Die zweite Transportsicherung 810 kann, wie in den Figuren 34 bis 41 gezeigt, keilförmig ausgebildet sein und zwischen dem Gehäuse und dem Hebel 860 angeordnet werden, so dass der Hebel 860 in einer teilbetätigten Stellung ist. Davor oder danach bzw. gleichzeitig kann die erste Transportsicherung 820 an der Gebervorrichtung angeordnet werden, vorzugsweise derart, dass jegliche Bewegung des Hebels unterbunden wird. Dabei kann der Hebel zwischen der ersten Transportsicherung 820 und der zweiten Transportsicherung 810 eingeklemmt werden.

Die Ausführungen der Erfindung sind vorzugsweise derart ausgelegt, dass sie einem Druck von bis zu 200 bar standhalten. Die Fortsätze, die den Einsatz in dem Gehäuse sichern, sind vorzugsweise auch so ausgelegt, dass sie einem Druck von bis zu 200 bar standhalten. Wie ausgeführt kann durch die Abstützung über die Verriegelung mit der Verriegelungseinrichtung 140 bzw. dem Clip Druck abgefangen werden. Eine solche Abstützung ist für Hinterschnitte in Kunststoffteilen und eine leichte bzw. einfache Montierbarkeit vorteilhaft.

Selbstverständlich ist die Erfindung nicht auf die dargestellten Ausführungsformen beschränkt. Die vorstehende Beschreibung ist daher nicht als beschränkend, sondern als erläuternd anzusehen. Die nachfolgenden Ansprüche sind so zu verstehen, dass ein genanntes Merkmal in zumindest einer Ausführungsform der Erfindung vorhanden ist. Dies schließt die Anwesenheit weiterer Merkmale nicht aus. Sofern die Ansprüche und die vorstehende Beschreibung "erste" und "zweite" Ausführungsformen definieren, so dient diese Bezeichnung der Unterscheidung zweier gleichartiger Ausführungsformen, ohne eine Rangfolge festzulegen.

## Patentansprüche

1. Gebervorrichtung (100), insbesondere für eine hydraulische Bremse oder Kupplung lenkergeführter Fahrzeuge, die ein Gehäuse (110) mit einer Kupplungsöffnung (115), in die ein Leitungsstutzen (160) zum Kuppeln einer Hydraulikleitung (170) an das Gehäuse (110) anordbar ist, und eine Verriegelungseinrichtung (140) aufweist, die derart ausgebildet und angeordnet ist, dass der Leitungsstutzen (160) in der Kupplungsöffnung (115) mit der Verriegelungseinrichtung (140) verriegelbar ist, sobald der Leitungsstutzen (160) in einer Betriebsposition in der Kupplungsöffnung (115) angeordnet ist, in der die Gebervorrichtung (100) betätigbar ist, um hydraulischen Druck aufzubauen,
wobei in dem Gehäuse (110) eine Ventileinrichtung mit einem Ventilschließglied (120) angeordnet ist, das derart ausgebildet und angeordnet ist, dass das Ventilschließglied (120) in einer geschlossen Stellung die Kupplungsöffnung (115) verschließt, wenn der Leitungsstutzen (160) nicht in der Betriebsposition in der Kupplungsöffnung (115) angeordnet ist, und das Ventilschließglied (120) in einer offenen Stellung die Kupplungsöffnung (115) öffnet, wenn der Leitungsstutzen (160) in der Betriebsposition in der Kupplungsöffnung (115) angeordnet ist,
wobei das Ventilschließglied (120) derart angeordnet und ausgebildet ist, dass das Ventilschließglied (120) den Leitungstutzen (160) umschließt, wenn der Leitungsstutzen (160) in der Betriebsposition in der Kupplungsöffnung (115) angeordnet ist,
**dadurch gekennzeichnet, dass** das Ventilschließglied (120) eine Membran (121) aufweist, die derart ausgebildet und angeordnet ist, dass die Membran (121) die Kupplungsöffnung (115) verschließt, wenn der Leitungsstutzen (160) noch nicht in der Betriebsposition in der Kupplungsöffnung (115) angeordnet wurde, und der Leitungsstutzen (160) die Membran (121) durchstößt, wenn der Leitungsstutzen (160) in der Betriebsposition in der Kupplungsöffnung (115) angeordnet wird.

2. Gebervorrichtung (100) nach Anspruch 1, **dadurch gekennzeichnet, dass** das Ventilschließglied (120) derart angeordnet und ausgebildet ist, dass das Ventilschließglied (120) Durchgänge (125) aufweist, die mit einem Durchgang (165) im dem Leitungstutzen (160) fluidverbunden sind, wenn der Leitungsstutzen (160) in der Betriebsposition in der Kupplungsöffnung (115) angeordnet ist, und/oder
dass die Gebervorrichtung (100) einen Einsatz (130) aufweist, der derart angeordnet und ausgebildet ist, dass der Einsatz (130) das Ventilschließglied (120) in der Kupplungsöffnung (115) in axialer Richtung gegen das Gehäuse (110) einklemmt.

3. Gebervorrichtung (100) nach einem der vorhergehenden Ansprüche, **dadurch gekennzeichnet, dass** die Membran (121) derart ausgebildet und angeordnet ist, dass die Membran (121) die Kupplungsöffnung (115) verschließt, wenn der Leitungsstutzen (160) noch nicht in der Betriebsposition in der Kupplungsöffnung (115) angeordnet wurde, und der Leitungsstutzen (160) die Membran (121) durchstößt, wenn der Leitungsstutzen (160) in der Betriebsposition in der Kupplungsöffnung (115) angeordnet wird, und/oder
die Membran (121) derart ausgebildet und angeordnet ist, dass die Membran (121) die Kupplungsöffnung (115) verschließt, wenn die Gebervorrichtung (100) noch nicht betätigt wurde, und die Membran (121) aufgebrochen wird, wenn die mit Hydraulikfluid gefüllte Gebervorrichtung (100) das erste Mal betätigt wird und/oder der Leitungsstutzen (160) in der Betriebsposition in der Kupplungsöffnung (115) angeordnet ist.

4. Gebervorrichtung (100) nach Anspruch 3, **dadurch gekennzeichnet, dass** die Membran (121) eine oder mehrere Sollbruchstellen aufweist, die vorzugsweise als eine oder mehrere Rillen (122, 123) ausgebildet sind, und/oder
**dadurch gekennzeichnet, dass** der Leitungsstutzen (160) derart ausgebildet ist, dass die Membran (121) an bestimmten Stellen aufgebrochen wird, wenn der Leitungsstutzen (160) beim Bewegen in die Betriebsstellung und/oder bei der Betätigung der Gebervorrichtung (100) mit der Membran (121) in Engriff kommt, vorzugsweise derart, dass der Leitungsstutzen (160) die Membran (121) durchstößt und/oder dass die Membran (121) auf den Leitungsstutzen (160) gedrückt wird.

5. Gebervorrichtung (1) nach einem der vorhergehenden Ansprüche, **dadurch gekennzeichnet, dass** das Ventilschließglied (120) einen Ringabschnitt (124) aufweist, der den Leitungstutzen (160) umschließt, wenn der Leitungsstutzen (160) in der Betriebsposition in der Kupplungsöffnung (115) angeordnet ist.

6. Gebervorrichtung (100) nach Anspruch 5, **dadurch gekennzeichnet, dass** die Membran (121) seitlich an dem Ringabschnitt (124) oder mittig in dem Ringabschnitt angeordnet ist.

7. Gebervorrichtung (100) nach einem der Ansprüche 5 bis 6, **dadurch gekennzeichnet, dass** der Ringabschnitt (124) derart angeordnet und ausgebildet ist, dass der Ringabschnitt (124) eine radiale Dichtung zwischen der Kupplungsöffnung (115) des Gehäuses (110) und dem Leitungstutzen (160) ausbildet, wenn der Leitungsstutzen (160) in der Betriebsposition in der Kupplungsöffnung (115) angeordnet ist.

8. Gebervorrichtung (100) nach einem der vorhergehenden Ansprüche, **dadurch gekennzeichnet, dass** in der Kupplungsöffnung (115) ein Einsatz (130) angeordnet ist, der derart ausgebildet und angeordnet ist, dass der Einsatz (130) das Ventilschließglied (120) in der Kupplungsöffnung (115) sichert und der Leitungsstutzen (160) in dem Einsatz (130) zum Kuppeln der Hydaulikleitung (170) an das Gehäuse (110) anordbar ist.

9. Gebervorrichtung (100) nach Anspruch 8, **dadurch gekennzeichnet, dass** der Ringabschnitt (124) derart angeordnet und ausgebildet ist, dass der Ringabschnitt eine axiale Dichtung zwischen der Kupplungsöffnung (115) des Gehäuses (110) und dem Einsatz (130) ausbildet, und/oder **dadurch gekennzeichnet, dass** der Einsatz (130) einen Vorsprung (131) aufweist, der derart angeordnet und ausgebildet ist, dass der Vorsprung (131) in eine Ausnehmung in dem Gehäuse (110) derart eingreift, dass der Vorsprung (131) den Einsatz (130) in der Kupplungsöffnung (115) sichert.

10. Gebervorrichtung (200) nach einem der vorhergehenden Ansprüche, **dadurch gekennzeichnet, dass** der Leitungsstutzen (160) einen Durchgang (165) für Hydraulikfluid und das Ventilschließglied (220) einen Durchgang (225) aufweist, der mit dem Durchgang (165) in Verbindung steht, wenn der Leitungsstutzen (160) in der Betriebsposition in der Kupplungsöffnung (115) angeordnet ist.

11. Gebervorrichtung (200) nach Anspruch 10, **dadurch gekennzeichnet, dass** die Gebervorrichtung (200) einen Druckraum aufweist, und dass das Ventilschließglied (220) einen Dichtungsabschnitt (227) aufweist, der derart angeordnet und ausgebildet ist, dass der Druckraum mit dem Durchgang (225) in Verbindung steht, wenn der Leitungsstutzen (160) in der Betriebsposition in der Kupplungsöffnung (115) angeordnet ist, und dass der Dichtungsabschnitt (227) die Verbindung zwischen dem Durchgang (225) und dem Druckraum unterbricht, wenn der Leitungsstutzen (160) nicht in der Betriebsposition in der Kupplungsöffnung (115) angeordnet ist.

12. Gebervorrichtung (200) nach Anspruch 11, **dadurch gekennzeichnet, dass** die Kupplungsöffnung (215) zumindest einen Überströmkanal (216) oder mehrere Überströmkanäle (216) aufweist, und der Dichtungsabschnitt (227) derart angeordnet und ausgebildet sind, dass der Dichtungsabschnitt (227) den zumindest einen Überströmkanal (216) oder die mehreren Überströmkanäle (216) überfährt, wenn der Leitungsstutzen (160) in der Betriebsposition in der Kupplungsöffnung (115) angeordnet ist, und dass der Dichtungsabschnitt (227) gegen die Kupplungsöffnung (215) abdichtet, wenn der Leitungsstutzen (160) nicht in der Betriebsposition in der Kupplungsöffnung (115) angeordnet ist.

13. Gebervorrichtung (300) nach einem der Ansprüche 5 bis 11, **dadurch gekennzeichnet, dass** in der Kupplungsöffnung (115) ein Einsatz (330) zur Aufnahme des Leitungsstutzens (160) vorgesehen ist, dass das Ventilschließglied (320) einen Durchgang (325) und einen Dichtungsabschnitt (227) aufweist, und dass der Einsatz (330) und das Ventilschließglied (320) derart angeordnet und ausgebildet sind, dass der Druckraum mit dem Durchgang (325) in Verbindung steht, wenn der Leitungsstutzen (160) in der Betriebsposition in der Kupplungsöffnung (115) angeordnet ist, und dass der Dichtungsabschnitt (327) gegen den Einsatz (330) abdichtet, wenn der Leitungsstutzen (160) nicht in der Betriebsposition in der Kupplungsöffnung (115) angeordnet ist.

14. Gebervorrichtung (200, 300) nach einem der vorhergehenden Ansprüche, **dadurch gekennzeichnet, dass** die Gebervorrichtung (200, 300) eine Federeinrichtung (270, 370) aufweist, die derart angeordnet und ausgebildet ist, dass Federeinrichtung (270, 370) das Ventischließglied (220, 320) in Richtung des Leitungsstutzens (160) vorspannt, und/oder **dadurch gekennzeichnet, dass** die Gebervorrichtung (400, 500) einen Anschlag (418, 518) aufweist, der derart angeordnet und ausgebildet ist, dass der Leitungsstutzen (160) das Ventischließglied (220, 320) gegen den Anschlag (418, 518) drückt, wenn der Leitungsstutzen (160) in der Betriebsposition in der Kupplungsöffnung (115) angeordnet ist, und/oder **dadurch gekennzeichnet, dass** der Leitungsstutzen (160) und das Ventischließglied (420, 520) derart angeordnet und ausgebildet sind, dass der Leitungsstutzen (160) und das Ventischließglied (420, 520) formschlüssig in Eingriff sind.

15. Gebervorrichtung (800), nach einem der vorhergehenden Ansprüche, wobei die Gebervorrichtung (800) einen Hebel (860) zur Betätigung der Gebervorrichtung (800) und einen Ausgleichsbehälter (850) für Hydraulikfluid aufweist, wobei die Gebervorrichtung (800) einen Kolben (840) und eine Ausgleichsöffnung (851) aufweist, die bei der Betätigung der Gebervorrichtung (800) überfahren wird, um die Verbindung zwischen dem Ausgleichsbehälter (850) und einem Druckraum zu unterbrechen, wobei die Gebervorrichtung (800) eine erste Transportsicherung (820) aufweist, die derart ausgebildet und angeordnet ist, dass der Hebel (860) gegen eine Betätigung gesichert ist, **dadurch gekennzeichnet, dass** die Gebervorrichtung (800) eine zweite Transportsicherung (810) aufweist, die derart ausgebildet und angeordnet ist, dass der Hebel (860) in einer teilbetätigten Stellung gehalten wird, in der der Kolben (840) die Ausgleichsöffnung (851) überfahren hat.

## Claims

1. Master apparatus (100), in particular for a hydraulic brake or coupling of handlebar-guided vehicles, comprising a housing (110) having a coupling opening (115) into which a line connector (160) for coupling a hydraulic line (170) to the housing (110) can be arranged, and a locking device (140) which is designed and arranged in such a way that the line connector (160) can be locked in the coupling opening (115) with the locking device (140) as soon as the line connector (160) is arranged in an operating position in the coupling opening (115) in which the master apparatus (100) can be actuated in order to build up hydraulic pressure,
a valve device having a valve closing member (120) being arranged in the housing (110) which valve closing member is designed and arranged in such a way that, in a closed position, the valve closing member (120) closes the coupling opening (115) when the line connector (160) is not arranged in the operating position in the coupling opening (115), and, in an open position, the valve closing member (120) opens the coupling opening (115) when the line connector (160) is arranged in the operating position in the coupling opening (115),
the valve closing member (120) being arranged and designed in such a way that the valve closing member (120) surrounds the line connector (160) when the line connector (160) is arranged in the operating position in the coupling opening (115),
**characterized in that** the valve closing member (120) has a membrane (121) which is designed and arranged in such a way that the membrane (121) closes the coupling opening (115) when the line connector (160) has not yet been arranged in the operating position in the coupling opening (115), and the line connector (160) pierces the membrane (121) when the line connector (160) is arranged in the operating position in the coupling opening (115).

2. Master apparatus (100) according to claim 1,
**characterized in that** the valve closing member (120) is arranged and designed in such a way that the valve closing member (120) has passages (125) that are fluidly connected to a passage (165) in the line connector (160) when the line connector (160) is arranged in the operating position in the coupling opening (115), and/or in that the master apparatus (100) has an insert (130) which is arranged and designed in such a way that the insert (130) clamps the valve closing member (120) in the coupling opening (115) in an axial direction against the housing (110).

3. Master apparatus (100) according to any one of the preceding claims,
**characterized in that** the membrane (121) is designed and arranged in such a way that the membrane (121) closes the coupling opening (115) when the line connector (160) has not yet been arranged in the operating position in the coupling opening (115), and the line connector (15) pierces the membrane (121) when the line connector (160) is arranged in the operating position in the coupling opening (115), and/or
the membrane (121) is designed and arranged in such a way that the membrane (121) closes the coupling opening (115) when the master apparatus (100) has not yet been actuated, and the membrane (121) is broken when the master apparatus (100) filled with hydraulic fluid is actuated for the first time and/or the line connector (160) is arranged in the operating position in the coupling opening (115).

4. Master apparatus (100) according to claim 3,
**characterized in that** the membrane (121) has one or more predetermined breaking points, which are preferably designed as one or more grooves (122, 123), and/or
**characterized in that** the line connector (160) is designed in such a way that the membrane (121) is broken at specific points when the line connector (160) engages with the membrane (121) when moving into the operating position and/or when actuating the master apparatus (100) (121), preferably in such a way that the line connector (160) pierces the membrane (121) and/or **in that** the membrane (121) is pressed onto the line connector (160).

5. Master apparatus (1) according to any one of the preceding claims, **characterized in that** the valve closing member (120) has a ring section (124) which surrounds the line connector (160) when the line connector (160) is arranged in the operating position in the coupling opening (115).

6. Master apparatus (100) according to claim 5,
**characterized in that** the membrane (121) is arranged laterally on the ring section (124) or centrally in the ring section.

7. Master apparatus (100) according to any one of claims 5 to 6, **characterized in that** the ring section (124) is arranged and designed in such a way that the ring section (124) forms a radial seal between the coupling opening (115) of the housing (110) and the line connector (160) when the line connector (160) is arranged in the operating position in the coupling opening (115).

8. Master apparatus (100) according to any one of the preceding claims,
**characterized in that** an insert (130) is arranged in the coupling opening (115), which insert is designed and arranged in such a way that the insert (130) secures the valve closing member (120) in the coupling opening (115) and the line connector (160) can be arranged in the insert (130) for coupling the hydraulic line (170) to the housing (110).

9. Master apparatus (100) according to claim 8,
**characterized in that** the ring section (124) is arranged and designed in such a way that the ring section forms an axial seal between the coupling opening (115) of the housing (110) and the insert (130), and/or
**characterized in that** the insert (130) has a projection (131) which is arranged and designed in such a way that the projection (131) engages in a recess in the housing (110) in such a way that the projection (131) secures the insert (130) in the coupling opening (115).

10. Master apparatus (200) according to any one of the preceding claims,
**characterized in that** the line connector (160) has a passage (165) for hydraulic fluid and the valve closing member (220) has a passage (225) that communicates with the passage (165) when the line connector (160) is arranged in the operating position in the coupling opening (115).

11. Master apparatus (200) according to claim 10,
**characterized in that** the master apparatus (200) has a pressure chamber, and **in that** the valve closing member (220) has a sealing section (227) which is arranged and designed in such a way that the pressure chamber communicates with the passage (225) when the line connector (160) is arranged in the operating position in the coupling opening (115), and **in that** the sealing section (227) interrupts the connection between the passage (225) and the pressure chamber when the line connector (160) is not arranged in the operating position in the coupling opening (115).

12. Master apparatus (200) according to claim 11,
**characterized in that** the coupling opening (215) has at least one overflow channel (216) or a plurality of overflow channels (216), and the sealing section (227) is arranged and designed in such a way that the sealing section (227) passes over the at least one overflow channel (216) or the plurality of overflow channels (216) when the line connector (160) is arranged in the operating position in the coupling opening (115), and **in that** the sealing section (227) seals against the coupling opening (215) when the line connector (160) is not arranged in the operating position in the coupling opening (115).

13. Master apparatus (300) according to any one of claims 5 to 11, **characterized in that** an insert (330) for receiving the line connector (160) is provided in the coupling opening (115), **in that** the valve closing member (320) has a passage (325) and a sealing section (227), and **in that** the insert (330) and the valve closing member (320) are arranged and designed in such a way that the pressure chamber communicates with the passage (325) when the line connector (160) is arranged in the operating position in the coupling opening (115), and **in that** the sealing section (327) seals against the insert (330) when the line connector (160) is not arranged in the operating position in the coupling opening (115).

14. Master apparatus (200, 300) according to any one of the preceding claims,
**characterized in that** the master apparatus (200, 300) has a spring device (270, 370) which is arranged and designed in such a way that the spring device (270, 370) pretensions the valve closing member (220, 320) in the direction of the line connector (160), and/or **characterized in that** the master apparatus (400, 500) has a stop (418, 518) which is arranged and designed in such a way that the line connector (160) presses the valve closing member (220, 320) against the stop (418, 518) when the line connector (160) is arranged in the operating position in the coupling opening (115), and/or **characterized in that** the line connector (160) and the valve closing member (420, 520) are arranged and designed in such a way that the line connector (160) and the valve closing member (420, 520) are in interlocking engagement.

15. Master apparatus (800) according to any one of the preceding claims,
wherein the master apparatus (800) has a lever (860) for actuating the master apparatus (800) and a compensation container (850) for hydraulic fluid, the master apparatus (800) having a piston (840) and a compensation opening (851) which is traversed when the master apparatus (800) is actuated in order to interrupt the connection between the compensation container (850) and a pressure chamber, the master apparatus (800) having a first transport lock (820) which is designed and arranged in such a way that the lever (860) is secured against actuation,
**characterized in that** the master apparatus (800) has a second transport lock (810) which is designed and arranged in such a way that the lever (860) is held in a partially actuated position in which the piston (840) has passed over the compensation opening (851).

## Revendications

1. Dispositif émetteur (100), en particulier pour un frein ou un accouplement hydraulique de véhicules guidés par guidon, qui comprend un boîtier (110) muni d'une ouverture d'accouplement (115) dans laquelle peut être placée une tubulure de conduite (160) destinée à accoupler une conduite hydraulique (170) au boîtier (110), et un moyen de verrouillage (140) qui est conçu et agencé de manière à permettre à la tubulure de conduite (160) dans l'ouverture d'accouplement (115) d'être verrouillée par le moyen de verrouillage (140) dès que la tubulure de conduite (160) est placée en position de fonctionnement dans l'ouverture d'accouplement (115), dans laquelle le dispositif émetteur (100) peut être actionné pour établir une pression hydraulique,
dans lequel
un dispositif de vanne muni d'un élément d'obturation de vanne (120) est agencé dans le boîtier (110), ledit élément d'obturation de vanne (120) étant conçu et agencé de manière à obturer, en position fermée, l'ouverture d'accouplement (115) lorsque la tubulure de conduite (160) n'est pas placée en position de fonctionnement dans l'ouverture d'accouplement (115), et l'élément d'obturation de vanne (120) libère l'ouverture d'accouplement (115) en position ouverte lorsque la tubulure de conduite (160) est placée en position de fonctionnement dans l'ouverture d'accouplement (115),
l'élément d'obturation de vanne (120) est agencé et conçu de telle sorte que l'élément d'obturation de vanne (120) entoure la tubulure de conduite (160) lorsque la tubulure de conduite (160) est placée en position de fonctionnement dans l'ouverture d'accouplement (115),
**caractérisé en ce que**
l'élément d'obturation de vanne (120) comporte une membrane (121) qui est conçue et agencée de telle sorte que la membrane (121) obture l'ouverture d'accouplement (115) lorsque la tubulure de conduite (160) n'a pas encore été placée en position de fonctionnement dans l'ouverture d'accouplement (115), et que la tubulure de conduite (160) perce la membrane (121) lorsque la tubulure de conduite (160) est placée en position de fonctionnement dans l'ouverture d'accouplement (115).

2. Dispositif émetteur (100) selon la revendication 1,
**caractérisé en ce que** l'élément d'obturation de vanne (120) est agencé et conçu de telle sorte que l'élément d'obturation de vanne (120) présente des passages (125) qui sont reliés fluidiquement à un passage (165) dans la tubulure de conduite (160) lorsque la tubulure de conduite (160) est placée en position de fonctionnement dans l'ouverture d'accouplement (115), et/ou en ce que le dispositif émetteur (100) présente un insert (130) qui est agencé et conçu de telle sorte que l'insert (130) serre l'élément d'obturation de vanne (120) dans l'ouverture d'accouplement (115) en direction axiale contre le boîtier (110).

3. Dispositif émetteur (100) selon l'une des revendications précédentes,
**caractérisé en ce que** la membrane (121) est conçue et agencée de telle sorte que la membrane (121) obture l'ouverture d'accouplement (115) lorsque la tubulure de conduite (160) n'a pas encore été placée en position de fonctionnement dans l'ouverture d'accouplement (115), et que la tubulure de conduite (160) perce la membrane (121) lorsque la tubulure de conduite (160) est placée en position de fonctionnement dans l'ouverture d'accouplement (115), et/ou
**en ce que** la membrane (121) est conçue et agencée de telle sorte que la membrane (121) obture l'ouverture d'accouplement (115) lorsque le dispositif émetteur (100) n'a pas encore été actionné, et que la membrane (121) se rompt lorsque le dispositif émetteur (100), rempli de fluide hydraulique, est actionné pour la première fois et/ou que la tubulure de conduite (160) est placée en position de fonctionnement dans l'ouverture d'accouplement (115).

4. Dispositif émetteur (100) selon la revendication 3,
**caractérisé en ce que** la membrane (121) présente un ou plusieurs points destinés à la rupture, qui sont de préférence réalisés sous la forme d'une ou plusieurs rainures (122, 123), et/ou
**caractérisé en ce que** la tubulure de conduite (160) est conçue de telle sorte que la membrane (121) se rompt à certains endroits lorsque la tubulure de conduite (160) vient en engagement avec la membrane (121) lors du déplacement vers la position de fonctionnement et/ou lors de l'actionnement du dispositif émetteur (100), de préférence de telle sorte que la tubulure de conduite (160) perce la membrane (121) et/ou que la membrane (121) est pressée sur la tubulure de conduite (160).

5. Dispositif émetteur (1) selon l'une des revendications précédentes,
**caractérisé en ce que** l'élément d'obturation de vanne (120) présente une partie annulaire (124) qui entoure la tubulure de conduite (160) lorsque la tubulure de conduite (160) est placée en position de fonctionnement dans l'ouverture d'accouplement (115).

6. Dispositif émetteur (100) selon la revendication 5,
**caractérisé en ce que** la membrane (121) est placée latéralement sur la partie annulaire (124) ou au centre de la partie annulaire.

7. Dispositif émetteur (100) selon l'une des revendications 5 à 6,
**caractérisé en ce que** la partie annulaire (124) est agencée et conçue de telle sorte que la partie annulaire (124) forme un joint d'étanchéité radial entre l'ouverture d'accouplement (115) du boîtier (110) et la tubulure de conduite (160) lorsque la tubulure de conduite (160) est placée en position de fonctionnement dans l'ouverture d'accouplement (115).

8. Dispositif émetteur (100) selon l'une des revendications précédentes,
**caractérisé en ce qu'**un insert (130) est placé dans l'ouverture d'accouplement (115), lequel est conçu et agencé de telle sorte que l'insert (130) fixe l'élément d'obturation de vanne (120) dans l'ouverture d'accouplement (115) et que la tubulure de conduite (160) peut être placée dans l'insert (130) pour accoupler la conduite hydraulique (170) au boîtier (110).

9. Dispositif émetteur (100) selon la revendication 8,
**caractérisé en ce que** la partie annulaire (124) est agencée et conçue de telle sorte que la partie annulaire forme un joint d'étanchéité axial entre l'ouverture d'accouplement (115) du boîtier (110) et l'insert (130), et/ou
**caractérisé en ce que** l'insert (130) présente une saillie (131) qui est agencée et conçue de telle sorte que la saillie (131) s'engage dans un évidement dans le boîtier (110) de sorte que la saillie (131)fixe l'insert (130) dans l'ouverture d'accouplement (115).

10. Dispositif émetteur (200) selon l'une des revendications précédentes,
**caractérisé en ce que** la tubulure de conduite (160) présente un passage (165) pour le fluide hydraulique, et l'élément d'obturation de vanne (220) présente un passage (225) qui communique avec le passage (165) lorsque la tubulure de conduite (160) est placée en position de fonctionnement dans l'ouverture d'accouplement (115).

11. Dispositif émetteur (200) selon la revendication 10,
**caractérisé en ce que** le dispositif émetteur (200) comporte une chambre de pression, et **en ce que** l'élément d'obturation de vanne (220) comporte une partie d'étanchéité (227) qui est agencée et conçue de telle sorte que la chambre de pression communique avec le passage (225) lorsque la tubulure de conduite (160) est placée en position de fonctionnement dans l'ouverture d'accouplement (115), et **en ce que** la partie d'étanchéité (227) interrompt la communication entre le passage (225) et la chambre de pression lorsque la tubulure de conduite (160) n'est pas placée en position de fonctionnement dans l'ouverture d'accouplement (115).

12. Dispositif émetteur (200) selon la revendication 11,
**caractérisé en ce que** l'ouverture d'accouplement (215) présente au moins un canal de décharge (216) ou plusieurs canaux de décharge (216), et la partie d'étanchéité (227) est agencée et conçue de telle sorte que la partie d'étanchéité (227) franchit ledit au moins un canal de décharge (216) ou lesdits plusieurs canaux de décharge (216) lorsque la tubulure de conduite (160) est placée en position de fonctionnement dans l'ouverture d'accouplement (115), et que la partie d'étanchéité (227) assure l'étanchéité par rapport à l'ouverture d'accouplement (215) lorsque la tubulure de conduite (160) n'est pas placée en position de fonctionnement dans l'ouverture d'accouplement (115).

13. Dispositif émetteur (300) selon l'une des revendications 5 à 11,
**caractérisé en ce qu'**un insert (330) destiné à recevoir la tubulure de conduite (160) est prévu dans l'ouverture d'accouplement (115), **en ce que** l'élément d'obturation de vanne (320) présente un passage (325) et une partie d'étanchéité (227), et **en ce que** l'insert (330) et l'élément d'obturation de vanne (320) sont agencés et conçus de telle sorte que la chambre de pression communique avec le passage (325) lorsque la tubulure de conduite (160) est placée en position de fonctionnement dans l'ouverture d'accouplement (115), et **en ce que** la partie d'étanchéité (327) assure l'étanchéité par rapport à l'insert (330) lorsque la tubulure de conduite (160) n'est pas placée en position de fonctionnement dans l'ouverture d'accouplement (115).

14. Dispositif émetteur (200, 300) selon l'une des revendications précédentes,
**caractérisé en ce que** le dispositif émetteur (200, 300) comprend un organe à effet ressort (270, 370) qui est agencé et conçu de telle sorte que l'organe à effet ressort (270, 370) met sous précontrainte l'élément d'obturation de vanne (220, 320) en direction de la tubulure de conduite (160), et/ou
**caractérisé en ce que** le dispositif émetteur (400, 500) comprend une butée (418, 518) qui est agencée et conçue de telle sorte que la tubulure de conduite (160) presse l'élément d'obturation de vanne (220, 320) contre la butée (418, 518) lorsque la tubulure de conduite (160) est placée en position de fonctionnement dans l'ouverture d'accouplement (115), et/ou
**caractérisé en ce que** la tubulure de conduite (160) et l'élément d'obturation de vanne (420, 520) sont agencés et conçus de telle sorte que la tubulure de conduite (160) et l'élément d'obturation de vanne (420, 520) s'engagent l'un dans l'autre par complémentarité de forme.

15. Dispositif émetteur (800) selon l'une des revendications précédentes,
le dispositif émetteur (800) comportant un levier (860), destiné à actionner le dispositif émetteur (800), et un réservoir de compensation (850) pour le fluide hydraulique, le dispositif émetteur (800) comportant un piston (840) et une ouverture de compensation (851) qui est franchie lors de l'actionnement du dispositif émetteur (800) afin d'interrompre la communication entre le réservoir de compensation (850) et une chambre de pression, le dispositif émetteur (800) comportant un premier moyen de blocage pendant le transport (820) qui est conçu et agencé de telle sorte que le levier (860) est bloqué contre tout actionnement,
**caractérisé en ce que** le dispositif émetteur (800) comporte un deuxième moyen de blocage pendant le transport (810) qui est conçu et agencé de telle sorte que le levier (860) est maintenu dans une position partiellement actionnée dans laquelle le piston (840) a franchi l'ouverture de compensation (851).
